# EUROPEAN PATENT APPLICATION

(11) **EP 4 697 641 A1**
(43) Date of publication of application: **18.02.2026**
(21) Application number: 23941953.4
(22) Date of filing: 21.06.2023
(51) Int. Cl.: H04L 9/08, H04L 9/32

(54) **COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); XIONG, Lihui, Dongguan, Guangdong 523860 (CN); CAO, Jin, Dongguan, Guangdong 523860 (CN); SHANG, Chao, Dongguan, Guangdong 523860 (CN); WANG, Chenran, Dongguan, Guangdong 523860 (CN); LI, Hui, Dongguan, Guangdong 523860 (CN); MA, Ruhui, Dongguan, Guangdong 523860 (CN); LI, Meng, Dongguan, Guangdong 523860 (CN); SHI, Cong, Dongguan, Guangdong 523860 (CN)
(74) Representative: RGTH
(86) International application number: PCT/CN2023/101869
(87) International publication number: WO 2024/259664

(57) **Abstract**

Provided are communication methods and communication devices. One method comprises: on the basis of a shared key, a first device generates a first key; the first device receives a second random number of a second device; on the basis of the first key, the first device generates first authentication information of the first device; and the first device sends a first message to the second device, the first message comprising the first authentication information, and the first authentication information being generated according to one or more of the following information: device information, service-related information, an identifier of a device forwarding the first message, and a first random number and a second random number of the first device. Compared with the prior art, the first authentication information of the present application can carry more information. Therefore, the present application can provide authentication attributes, such that first authentication information-based security authentication processes can verify more information. In addition, the first authentication information-based security authentication processes can also negotiate about keys.

## Description

### TECHNICAL FIELD

This application relates to the field of communications technologies, and more specifically, to a communication method and a communications device.

### BACKGROUND

To meet a communication security requirement, security authentication needs to be performed on a communications device before a communication interaction. The security authentication may be one-way or two-way. The two-way security authentication is used as an example. Both communication parties may perform the security authentication on each other. When succeeding in the security authentication, the both communication parties may transmit encrypted data.

In a communications system, various security authentication protocols suitable for different terminals are proposed in a related technology. However, a security authentication solution in the related technology has a problem of poor authentication attributes.

### SUMMARY

This application provides a communication method and a communications device. The following describes various aspects of this application.

According to a first aspect, a communication method is provided, where the method includes: generating, by a first device, a first key based on a shared key; receiving, by the first device, a second random number of a second device; generating, by the first device, first authentication information of the first device based on the first key; and transmitting, by the first device, a first message to the second device, where the first message includes the first authentication information, where the first authentication information is generated by using one or more of the following information: service-related information of the first device, an identity of a device that forwards the first message, a first random number of the first device, or the second random number.

According to a second aspect, a communication method is provided, where the method includes: transmitting, by a second device, a second random number; and receiving, by the second device, a first message transmitted by a first device, where the first message includes first authentication information of the first device, the first authentication information is generated based on a first key, the first authentication information is generated by using one or more of the following information: service-related information of the first device, an identity of a device that forwards the first message, a first random number of the first device, or the second random number, and the first key is generated based on a shared key.

According to a third aspect, a communication method is provided, where the method includes: receiving, by a third device, a first message transmitted by a first device; and transmitting, by the third device, the first message to a second device, where the first message includes first authentication information of the first device, the first authentication information is generated based on a first key, the first authentication information is generated by using one or more of the following information: service-related information of the first device, an identity of a device that forwards the first message, a first random number of the first device, or a second random number of the second device, and the first key is generated based on a shared key.

According to a fourth aspect, a communications device is provided, where the communications device is a first device, and the communications device includes: a key generation unit, configured to generate a first key based on a shared key; a first receiving unit, configured to receive a second random number of a second device; a generation unit, configured to generate first authentication information of the first device based on the first key; and a first transmitting unit, configured to transmit a first message to the second device, where the first message includes the first authentication information, where the first authentication information is generated by using one or more of the following information: service-related information of the first device, an identity of a device that forwards the first message, a first random number of the first device, or the second random number.

According to a fifth aspect, a communications device is provided, where the communications device is a second device, and the communications device includes: a second transmitting unit, configured to transmit a second random number; and a second receiving unit, configured to receive a first message transmitted by a first device, where the first message includes first authentication information of the first device, the first authentication information is generated based on a first key, the first authentication information is generated by using one or more of the following information: service-related information of the first device, an identity of a device that forwards the first message, a first random number of the first device, or the second random number, and the first key is generated based on a shared key.

According to a sixth aspect, a communications device is provided, where the communications device is a third device, and the communications device includes: a third receiving unit, configured to receive a first message transmitted by a first device; and a third transmitting unit, configured to transmit the first message to a second device, where the first message includes first authentication information of the first device, the first authentication information is generated based on a first key, the first authentication information is generated by using one or more of the following information: service-related information of the first device, an identity of a device that forwards the first message, a first random number of the first device, or a second random number of the second device, and the first key is generated based on a shared key.

According to a seventh aspect, a communications device is provided, including a processor and a memory. The memory is configured to store one or more computer programs, and the processor is configured to invoke the computer program in the memory to cause the communications device to execute some or all of the steps of the foregoing method.

According to an eighth aspect, an embodiment of this application provides a communications system, and the system includes the foregoing communications device. In another possible design, the system may further include another device that interacts with the communications device in the solution provided in this embodiment of this application.

According to a ninth aspect, an embodiment of this application provides a computer-readable storage medium. The computer-readable storage medium stores a computer program, and the computer program causes a communications device to execute some or all of the steps in the method according to the foregoing aspects.

According to a tenth aspect, an embodiment of this application provides a computer program product. The computer program product includes a non-transitory computer-readable storage medium storing a computer program, and the computer program is operable to cause a communications device to execute some or all of the steps of the method according to the foregoing aspects. In some implementations, the computer program product may be a software installation package.

According to an eleventh aspect, an embodiment of this application provides a chip. The chip includes a memory and a processor. The processor may invoke a computer program from the memory and run the computer program, to implement some or all of the steps described in the method according to the foregoing aspects.

Compared with a related technology, the first authentication information in this application may be generated based on one or more of device information, the service-related information, the identity of the device that forwards the first information, or a security parameter, that is, the first authentication information may carry more information. Therefore, a quantity of authentication attributes can be increased in this application, so that more information can be verified in a security authentication process that is based on the first authentication information. In addition, because the first authentication information is generated based on the first key, key negotiation may be implemented in the security authentication process that is based on the first authentication information.

### BRIEF DESCRIPTION OF DRAWINGS

FIG. 1 is a schematic diagram of a wireless communications system to which embodiments of this application are applicable.
FIG. 2 is a schematic diagram of a key derivation architecture of 5GAKA and EAP-AKA'.
FIG. 3A is a schematic diagram of an encryption part of an ASCON-AEAD algorithm.
FIG. 3B is a schematic diagram of a decryption part of an ASCON-AEAD algorithm.
FIG. 4 is a schematic flowchart of a communication method according to an embodiment of this application.
FIG. 5 is a schematic diagram of a key derivation architecture according to an embodiment of this application.
FIG. 6 is a schematic diagram of another key derivation architecture according to an embodiment of this application.
FIG. 7 is a schematic flowchart of a communication method according to Embodiment 1 of this application.
FIG. 8 is a schematic flowchart of a communication method according to Embodiment 2 of this application.
FIG. 9 is a schematic flowchart of a communication method according to Embodiment 3 of this application.
FIG. 10 is a schematic flowchart of a communication method according to Embodiment 4 of this application.
FIG. 11 is a schematic flowchart of a communication method according to Embodiment 5 of this application.
FIG. 12 is a schematic diagram of a structure of a communications device according to an embodiment of this application.
FIG. 13 is a schematic diagram of a structure of another communications device according to an embodiment of this application.
FIG. 14 is a schematic diagram of a structure of another communications device according to an embodiment of this application.
FIG. 15 is a schematic diagram of a structure of a communications apparatus according to an embodiment of this application.

### DESCRIPTION OF EMBODIMENTS

Technical solutions in this application are described below with reference to the accompanying drawings.

### Communications system

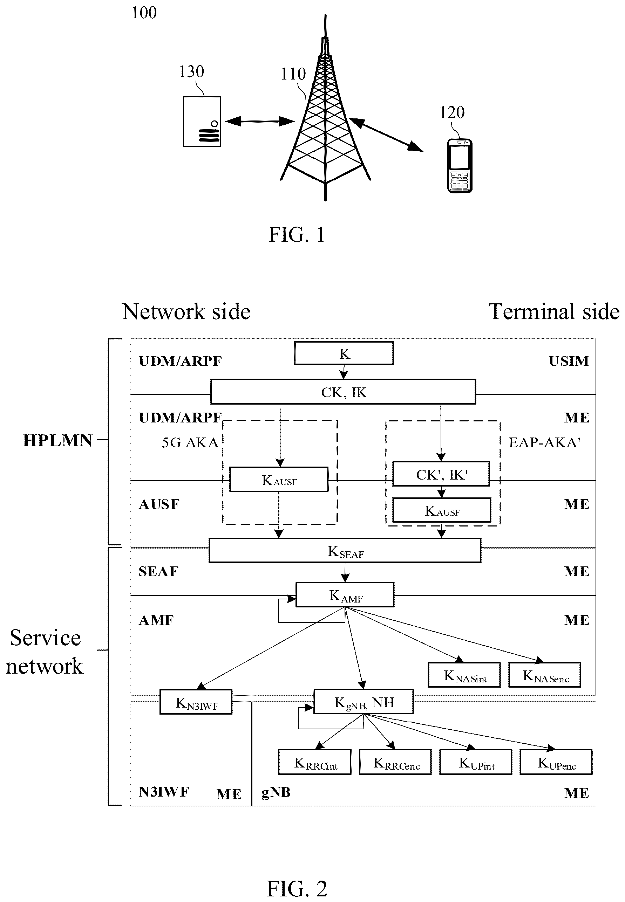

FIG. 1 shows a wireless communications system 100 to which embodiments of this application are applied. The wireless communications system 100 may include a communications device. The communications device may include an access network device 110, a terminal 120, and a core network device 130.

FIG. 1 exemplarily shows one network device and two terminals. Optionally, the wireless communications system 100 may include a plurality of network devices, and another quantity of terminals may be included in coverage of each network device. This is not limited in embodiments of this application.

It should be understood that the technical solutions of embodiments of this application may be applied to various communications systems, such as a 5th generation (5th generation, 5G) system or new radio (New Radio, NR), a long term evolution (Long Term Evolution, LTE) system, an LTE frequency division duplex system, and an LTE time division duplex system. The technical solutions provided in this application may further be applied to a future communications system, such as a 6th generation mobile communications system or a satellite communications system.

The terminal in embodiments of this application may be referred to as a user equipment (UE), an access terminal, a mobile terminal, a wireless terminal, a subscriber unit, or a user agent. The terminal in embodiments of this application may alternatively be a device providing a user with voice/data connectivity, for example, a handheld device or a vehicle-mounted device having a wireless connection function. The terminal in embodiments of this application may alternatively be a mobile phone, a tablet computer, a laptop computer, a personal digital assistant, a mobile internet device, a wearable device, or the like.

The network device in embodiments of this application may be a device configured to communicate with a terminal device. The network device may include an access network device or a base station that communicates with the terminal 120 located within specific coverage. In embodiments of this application, the access network device may refer to a NodeB (NodeB), an evolved NodeB (eNB), a next-generation NodeB (gNB), a relay station, a home base station, a network controller, an access point (AP), or the like that connects a terminal to a wireless network. Alternatively, the base station may be a device that functions as a base station in wireless communication, a network-side device in a 6G network, a device that functions as a base station in the future communications system, or the like. The base station may support networks of a same access technology or different access technologies. A specific technology and a specific device form used by the access network device are not limited in embodiments of this application.

The network device may include a core network device 130. The core network in embodiments of this application may include an entity that processes and forwards signaling and data from a user. For example, the core network may include entities (entity) such as an access and mobility management function (AMF), a session management function (SMF), a user plane gateway, a location management function (LMF), an authentication service function (AUSF), and a unified data management function (UDM). The AUSF may be configured to: receive an identity authentication request for the terminal from the AMF, request a key from the UDM, and then forward a delivered key to the AMF for authentication processing. The UDM may include functions such as generation and storage of user subscription data, and authentication data management, and supports an interaction with an external third-party server.

The network device and the terminal may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal are located is not limited.

It should be understood that all or some of functions of the communications device in this application may alternatively be implemented by software functions running on hardware, or by virtualization functions instantiated on a platform (for example, a cloud platform).

### Zero-power communications technology

As wireless communications technologies develop, it becomes a trend to integrate a wireless communication system with various vertical industries such as logistics, manufacturing, transportation, and energy. However, in these industries, a terminal usually needs to have features such as relatively low costs, a relatively small size (for example, being ultra-thin), being maintenance-free, and a long life. In view of this, the zero-power communications technology is provided. A zero-power communications system may be used in scenarios such as a wireless industrial sensing network, intelligent agriculture, intelligent warehousing and logistics, and smart household.

The zero-power technology mainly combines a radio frequency energy harvesting technology, a backscattering technology, and a low-power computing technology, to implement an advantage of a device node carrying no power supply. A core of radio frequency energy harvesting is to convert radio frequency energy into a direct current. Energy may be stored in a battery or a capacitor, or may be harvested to be directly used to drive a logic circuit, a digital chip, a sensor, or the like, thereby completing functions and applications such as modulation and transmission of a backscatter signal and harvesting and processing of sensing information.

**In** the zero-power communications technology, based on energy sources and energy use manners of terminals, the terminals may be classified into three types: a passive zero-power terminal, a semi-passive zero-power terminal, and an active zero-power terminal.

It should be additionally noted that, during a standardization discussion, a zero-power internet of things may alternatively be referred to as an ambient power-enabled internet of things (Ambient power-enabled Internet of Things, AIoT), or an ambient internet of things (ambient IoT) for short. An AIoT device may refer to an internet of things device that uses varied ambient energy such as wireless radio frequency energy, light energy, solar energy, thermal energy, and mechanical energy. The AIoT device may have no energy reserve capability, or may have a very limited energy storage capability (for example, using a capacitor with a capacity of tens of uF).

### Security authentication

To meet a communication security requirement, security authentication may be performed on a communications device before a communication interaction. The security authentication may be two-way authentication. That is, both communication parties may perform the security authentication on each other. In a case of succeeding in the security authentication on each other, the both communication parties may transmit encrypted data.

**In** a communications system, various security authentication protocols suitable for different terminals are proposed in a related technology. Specifications of the 3GPP standard are used as an example. The security authentication protocols may be applicable to one or more of a common terminal, a cellular internet of things (Cellular Internet of Things, CIoT) device, or a machine-type communication (Machine-Type Communication, MTC) device. A security authentication solution applicable to the common terminal may include 5GAKA, EAP-AKA', EPSAKA, or the like. A security authentication solution applicable to the CIoT device may include a CP CIoT security solution for transmission of a small quantity of data. A BEST authentication solution is specially applicable to the MTC device. The BEST authentication solution may be implemented based on different authentication protocols. For example, the BSET authentication solution may be implemented based on the following authentication protocol: 5GAKA, EAPAKA', EPSAKA, GBA, or AKMA.

Different security authentication solutions may correspond to different key derivation architectures. For example, FIG. 2 is a schematic diagram of a key derivation architecture of 5GAKA and EAP-AKA'.

It may be seen from the foregoing key derivation architecture that the communications device needs to derive a plurality of types of keys. For example, in the solutions such as 5GAKA, EAP-AKA', and EPSAKA applicable to the common terminal, keys to be derived may include a non-access stratum control plane key, an access stratum control plane key, a user plane key, and an intermediate key.

### Overheads of security authentication

In authentication solutions of the 3GPP standard, when using a security authentication solution for mutual authentication, security computational overheads required by a terminal and a network device during an authentication process are the same, and f1 and f2 operations and an HMAC operation each need to be executed once. Different authentication solutions have different key derivation architectures, and corresponding computational overheads also vary. For example, 5GAKA requires to execute f3, f4, and f5 operations once and an HMAC-SHA256 operation ten times. EAP-AKA' requires to execute the f3, f4, and f5 operations once and the HMAC-SHA256 operation eleven times.

### Authenticated encryption algorithm

To provide high security and performance in environments with limited computing resources, lightweight authenticated encryption with associated data (Authenticated Encryption with Associated Data, AEAD) is gaining increasing attention. The AEAD is a form of encryption with confidentiality, integrity and authenticity. The AEAD is developed for the reason that simple encryption and decryption algorithms lack an authentication function, so that a decryptor cannot learn whether decrypted information is tampered with by an intermediary. Therefore, an algorithm that has both an encryption function and an authentication function is required.

A primary technology used in the AEAD algorithm is an advanced encryption standard (Advanced Encryption Standard, AES) algorithm with a Galois or Counter mode. While this algorithm may run efficiently in most cases, but there are some resource-limited scenarios in which use of the foregoing algorithm is limited. Consequently, a demand for a lightweight algorithm is growing. The ASCON, with relatively high security and relatively low implementation costs, has been selected by the National Institute of Standards and Technology (National Institute of Standards and Technology, NIST) as a lightweight cryptographic standard. An AEAD algorithm and a hash algorithm within the ASCON are selected by the NIST as lightweight cryptographic algorithm standards.

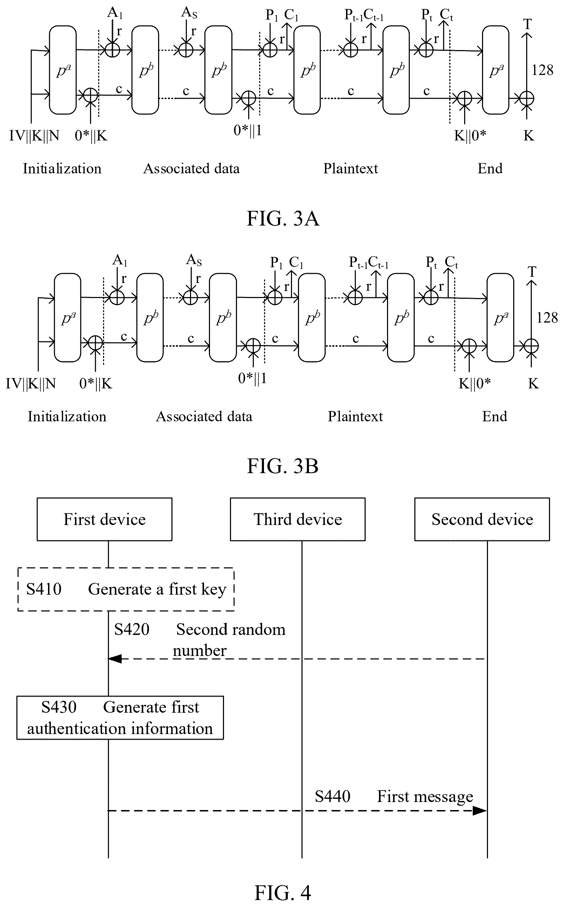

The ASCON-AEAD algorithm includes two parts: encryption and decryption. As a whole, the algorithm uses a sponge (sponge) cipher structure. FIG. 3A is a schematic diagram of an encryption (encryption) part of the ASCON-AEAD algorithm. FIG. 3B is a schematic diagram of a decryption (decryption) part of the ASCON-AEAD algorithm.

Procedures and structures of the encryption part and the decryption part of the ASCON-AEAD algorithm are basically the same. As shown in FIG. 3A, the encryption part includes four phases: initialization (initialization), associated data (associated data), a plaintext (plaintext) ciphertext, and finalization (finalization). As shown in FIG. 3B, the decryption part includes four phases: initialization, associated data, a ciphertext (ciphertext), and finalization. Parameters used in the ASCON-AEAD algorithm primarily include a key K, a plaintext P, associated information A, a ciphertext C, a preconfigured initialization vector IV, and a random number N. A may include one or more of the following information: a plaintext to be protected, a ciphertext, identity information of a device, and additional information, for example, an IP address. The ASCON-AEAD generates an authentication tag (authentication tag) (represented by T below). That is, an output of the ASCON-AEAD may include the authentication tag T. The authentication tag T may be used to authenticate integrity of the associated information A.

A difference between the encryption part and the decryption part is that an input and an output of the plaintext are opposite to an input and an output of the ciphertext. The input of the encryption part of the ASCON-AEAD may include K, A, and P, and the output may include C and T. The input of the decryption part may include K, A, and C, and the output may include P and T'. A can be authenticated by comparing T and T'.

As described above, various security authentication protocols suitable for different terminals are proposed in a related technology. However, an inventor of this application finds that a security authentication solution in the related technology has a problem of poor authentication attributes. Therefore, a security authentication solution of this application is proposed. FIG. 4 is used below as an example to describe the technical solution proposed in this application.

FIG. 4 is a schematic flowchart of a communication method according to an embodiment of this application.

The method shown in FIG. 4 may be executed by a first device and a second device. For example, the first device may include a terminal, and the second device may include a network device.

In some embodiments, the first device may be an AIoT terminal. The second device may include one or more network devices. The second device may, for example, include a UDM that stores or manages a shared key. Alternatively, the second device may include one or more of the following: a network function (Network Function, NF) or an application function (Application Function, AF) device. The NF may include one or more of the following: an AMF, an AUSF, a session management function (Session Management Function, SMF), a network exposure function (Network Exposure Function, NEF), a key management server (Key Management Server, KMS), an authentication and key management for applications (Authentication and Key Management for Applications, AKMA) anchor function (AKMA Anchor Function, AAnF), a bootstrapping server function (Bootstrapping Server Function, BSF), a home public land mobile network (Home Public Land Mobile Network, HPLMN) security endpoint (HPLMN Security Endpoint, HSE), a unified data repository (Unified Data Repository, UDR), a security anchor function (Security Anchor Function, SEAF), or a core network specially used for authentication. Alternatively, the second device may include a wireless local area network (Wireless Local Area Network, WLAN) gateway.

In a case that the second device includes the AF device and the UDM, a secure channel may be established between the AF device and the UDM. The secure channel may be established before authentication.

The method shown in FIG. 4 may include step S430.

Step S430: The first device generates first authentication information of the first device based on a first key.

The authentication information in this application may be used to implement one or more of the following: identity authentication of a corresponding communications device, secure transmission authentication, security and/or integrity authentication of transmission content, key negotiation, or the like. A communications device may communicate with another party only after succeeding in authentication. For example, the first authentication information of the first device may be used to verify one or more of the following information: identity authentication of the first device, authentication of secure transmission situation of the first device, or security and/or integrity authentication of transmission content of the first device. In addition, the first authentication information is generated based on the first key. Therefore, based on the first authentication information, an operation may be implemented between the first device and the second device, for example, key negotiation.

The first key may be a shared key between the first device and the second device. The shared key may be a root key in a key derivation architecture. In an example in which the first device is an AIoT terminal and the second device is a network device, the shared key may be a key shared between the AIoT terminal and the network device. In some embodiments, the shared key may be a symmetric key, in other words, a shared key stored by the first device may be the same as a shared key stored by the second device.

The first key may be generated or derived based on a shared key. The method shown in FIG. 4 may include step S410. Step S410: The first device derives the first key based on a shared key.

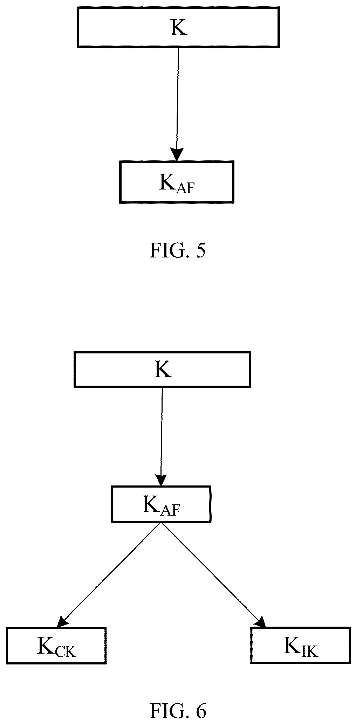

As an implementation, the first key may be derived from the shared key by using a first key derivation function. An input parameter of the first key derivation function may include one or more of the following: the shared key, a first identity of the first device, a length of the first identity, a first random number, a length of the first random number, a second random number, a length of the second random number, or a fixed value allocated by a third party. For example, the fixed value may be FC = 0x7E. Based on step S410, the key derivation architecture proposed in this application is shown in FIG. 5. In FIG. 5, the first key is represented by K_{AF}, and the shared key is represented by K. In some embodiments, the first key may alternatively be represented by K_{NF} or K_{gate}. As shown in FIG. 5, the shared key K may be used to derive the first key K_{AF}. As shown in FIG. 5, the key derivation architecture proposed in this application is more lightweight. Therefore, during security authentication, the communications device may reduce computational overheads of key derivation, thereby reducing energy consumption. For example, in a case that the first device is an AIoT terminal, a lightweight key derivation architecture may further reduce computational overheads of the AIoT terminal, thereby enabling the AIoT terminal to complete a communication process with a relatively small quantity of energy consumption.

It should be noted that the first random number may be generated by the first device. The second random number may be generated by the second device. The method shown in FIG. 4 may include step S420. Step S420: The second device transmits the second random number to the first device.

As mentioned above, the first authentication information may be generated based on the first key. The first authentication information may be generated further based on one or more of the following information: device information, service-related information, an identity of a device that forwards first information, a security parameter, or the like. Details are separately described below.

The device information may be used to indicate an identity of a device participating in security authentication. For example, the device information may include one or more of the following: identity information of the first device or identity information of the second device. The identity information of the first device may include an AIoT ID. The identity information of the second device may include one or more of the following: an AF ID, an NF ID, or a public land mobile network (Public Land Mobile Network, PLMN) ID.

The service-related information may be used to indicate information related to service data transmission. For example, the service-related information may include one or more of the following information: a service type identity (service type identity), a plaintext corresponding to service data, or a ciphertext corresponding to the service data.

The device that forwards the first message may include a base station and/or a third device. For example, the identity of the device that forwards the first message may include one or more of the following: an identity of a terminal device (functioning as a relay node) or an identity of a base station. The identity of the terminal device may include one or more of the following: a subscription concealed identifier (Subscription Concealed Identifier, SUCI), a subscription permanent identifier (Subscription Permanent Identifier, SUPI), or a generic public subscription identifier (Generic Public Subscription Identifier, GPSI). The identity of the base station may include a RAN node identity (RAN node identity).

The security parameter may be used to implement secure transmission. For example, the security parameter may include one or more of the following: the first random number of the first device, the second random number of the second device, a parameter related to security computation, or the like.

The first authentication information may be obtained based on a first algorithm. For example, the first algorithm may be an ASCON-AEAD algorithm. An input of the first algorithm may include the foregoing parameter used to generate the first authentication information. For example, the input or associated data A of the first algorithm may include one or more of the following: the first key, service-related information of the first device, the identity of the device that forwards the first message, the first random number, or the second random number. The first authentication information may include a verification tag T outputted by the first algorithm.

Compared with a related technology, the first authentication information in this application may be generated based on one or more of the device information, the service-related information, the identity of the device that forwards the first information, or the security parameter, that is, the first authentication information may carry more information. Therefore, a quantity of authentication attributes can be increased in this application, so that more information can be verified in a security authentication process that is based on the first authentication information.

The method shown in FIG. 4 may include step S440.

Step S440: The first device may transmit the first message to the second device.

The first message may include the first authentication information. For example, the first message may include an authentication request transmitted by the first device. In a case of two-way authentication, the first message may include the authentication request and/or an authentication reply message.

In some implementations, the first device may transmit the first message via one or more communications devices. FIG. 4 is used as an example, and the one or more communications devices may include the third device for execution. Step S440 may include: transmitting, by the first device, the first message to the third device; and transmitting, by the third device, the first message to the second device.

By forwarding the first message by the third device, the third device is allowed to participate in a communication process between the first device and the second device, thereby further reducing energy consumption of the first device. For example, the first device may be an AIoT terminal, and the third device may be a common terminal. The AIoT terminal may communicate with the common terminal with relatively low energy consumption, and the common terminal may provide a relatively large quantity of energy to communicate with the second device, so that the AIoT terminal can communicate with the third device by consuming a relatively small quantity of energy.

In consideration that the third device may forward information between the first device and the second device, the third device may alternatively be referred to as a relay node, a proxy node, or the like of the first device.

In some embodiments, the first device may not transmit the first message via the third device. For example, if the third device is a common device, the first device may transmit the first message directly to the third device by using a base station.

In addition to the first authentication information, the first message may further include a ciphertext corresponding to the service data. The ciphertext may correspond to the service data and/or signaling. The ciphertext can be obtained by encrypting a plaintext of service data and/or signaling.

In a related technology, authentication information and a ciphertext are respectively transmitted in two messages. In this application, authentication information and the ciphertext are set in one message for transmission, so that transmission of at least one message can be reduced, thereby lowering power consumption of a communications device. In other words, based on this application, both the authentication of the communications device and key confirmation can be performed through only one piece of signaling, thereby ensuring confidentiality and integrity of received service data. In addition, for zero-power terminal communication, in this application, security costs of a terminal such as security computational overheads and a quantity of transmission times are optimized, thereby meeting an ultra-low energy consumption requirement of a zero-power terminal. In addition, in this application, energy consumption required during communication processing by the zero-power terminal may be reduced, thereby further ensuring normal working of the zero-power terminal under a condition of limited energy supply, and ultimately improving use experience of a terminal user.

In some embodiments, the ciphertext may be generated based on the first key. That is, the first key may be used to implement confidentiality protection of signaling and/or service data, integrity protection of the signaling and/or the service data, and communication authentication.

In some embodiments, both the ciphertext and the first authentication information may be generated based on the first key. For example, the first key may be inputted into the first algorithm, and the first algorithm may output the ciphertext and the first authentication information. An input of the first algorithm may, for example, include the first key and the service data. An output of the first algorithm may, for example, include the ciphertext and the first authentication information. The input of the first algorithm may further include associated data A. The association data A may include data used to determine the first authentication information. For example, the associated data A may include one or more of the following information: the first key, the service-related information of the first device, the identity of the device that forwards the first message, the first random number, the second random number, or the service data. The service data may include full content of transmitted data, a transmitted message, and/or the like.

In the related technology, the communications device needs to perform authentication and encryption operations separately. In other words, at least two operations need to be performed. In this application, authentication and encryption can be implemented with a single operation by using the first algorithm. Therefore, in this application, computational overheads can be reduced and a low-power requirement of the zero-power terminal can be met. In addition, as described above, the first algorithm may include the ASCON-AEAD algorithm. The ASCON-AEAD algorithm is a lightweight algorithm that may offer an advantage of low costs, thereby alleviating pressure on limited hardware and software resources of the communications device.

In some embodiments, the ciphertext may be obtained based on a second key derived from the first key, and the first authentication information may be obtained based on a third key. The third key may be a key different from the second key. In the embodiments, the second key may be used to encrypt data, thereby implementing confidentiality protection of signaling and/or service data. Therefore, the second key may alternatively be referred to as a confidentiality key. The third key may be used to verify integrity of the ciphertext and may also be used to implement authentication. Therefore, the third key may alternatively be referred to as an integrity protection verification code. Alternatively, the third key may have a RES function. In a case that the first authentication information is obtained based on the third key, the first authentication information may include a message authentication code (Message Authentication Code, MAC).

Based on the second key and/or the third key, a key derivation architecture may be shown in FIG. 6. A first key K_{AF} may be derived based on a shared key K. A second key K_{CK} and a third key K_{IK} may be derived based on the first key K_{AF}.

As an implementation, the second key be derived by a second key derivation function. An input of the second key derivation function may include one or more of the following information: the first key or a fixed value allocated by a third party. For example, the fixed value may be FC = 0x7E. An output of the second key derivation function may include one or more of the following information: a first random number, a length of the first random number, a second random number, a length of the second random number, or the second key.

As an implementation, the third key may be derived by using a third key derivation function. An input of the third key derivation function may include one or more of the following information: the first key or a fixed value allocated by a third party. For example, the fixed value may be FC = 0x7E or FC = 0x6B. An output of the third key derivation function may include one or more of the following information: a first random number, a length of the first random number, a second random number, a length of the second random number, or the third key.

At least two of the foregoing key derivation functions may be the same. For example, the second key derivation function may be same as the third key derivation function. As an implementation, both the second key derivation function and third key derivation function may be KDF functions. In a case that the second key derivation function and third key derivation function are the same, the input of the second key derivation function (also referred to as the third key derivation function) may further include: a key identifier of a key to be outputted and a length of the key identifier. For example, if the second key is to be outputted, the key identifier may be 0x00; or if the third key is to be outputted, the key identifier may be 0x01. Alternatively, if the second key is to be outputted, the key identifier may be 0x01; or if the third key is to be outputted, the key identifier may be 0x00.

In a case that the third key includes a RES*, the RES* may be generated by using a fourth key derivation function. An input parameter of the fourth key derivation function may include one or more of the following: the shared key, the first random number, the second random number, the length of the first random number, the length of the second random number, a RES, a length of the RES, or a fixed value allocated by a third party. For example, the fixed value may be FC = 0x6B. The RES may be generated by using a function f2. An input of the function f2 may include one or more of the following: the shared key or a random number R₂. The function f2 may be obtained based on specifications in TS 35.206.

Both authentication parties may use the foregoing key derivation method to derive corresponding keys. That is, both the authentication parties may use the foregoing method to derive one or more of the first key, the second key, or the third key. In an example in which the second device includes a UDM, the second device may derive the first key based on the first random number, the second random number, and the shared key. Alternatively, the second device may request another communications device to derive a key. In an example in which the second device includes an AF device, the second device may transmit a second request. The second request may be used to derive the first key. A communications device that receives the second request may be the UDM. In a case that the UDM receives the second request, the second device may derive the first key. For a method for deriving the first key, refer to the foregoing. Details are not described herein again.

In this application, a length of each of the foregoing keys is not limited. For example, a length of the shared key, the first key, the second key, or the third key may be greater than or equal to 128 bits (bits).

As an implementation, based on the second key and the third key, the first device or the second device may use a confidentiality and integrity protection algorithm in the related technology. For example, a confidentiality and integrity protection algorithm in TS 33.501 may be used.

Based on the foregoing method, the first device may generate the ciphertext and the first authentication information. The second device may receive the ciphertext and the first authentication information through the first message. After receiving the first message, the second device may verify the first authentication information. In a case that the first authentication information is successfully verified, the second device may decrypt the ciphertext to obtain the service data. In a case that the first authentication information is unsuccessfully verified, the second device may reject the first message.

If the first device uses the first algorithm, the second device may verify the first authentication information based on the first algorithm. An input of the first algorithm run by the second device may include one or more of the following: the first key, the ciphertext, or the associated information A. An output of the first algorithm may include a plaintext of service data and/or verification information T'. The second device may determine whether the verification is successful, by comparing the verification tag T in the first authentication information with the verification information T'.

If the first device uses the confidentiality and integrity protection algorithm in TS 33.501, the UDM may verify the first authentication information. That is, the second device may include the UDM, or the second device (for example, an AF device) may forward the first authentication information to the UDM. After the UDM successfully verifies the first authentication information, the UDM may reply to the AF device with an authentication success message. After receiving the authentication success message, the AF device may derive the second key and the third key by using a corresponding key derivation function. A MAC may be verified by using the third key. If the MAC is unsuccessfully verified, the first message may be rejected. If the MAC is successfully verified, the ciphertext may be decrypted by using the second key to obtain the plaintext of the service data and/or the signaling.

In some embodiments, the first key may further be used to generate second authentication information for the second device. That is, based on the first key, authentication information for both the communication parties may be generated. In an example in which the first device is a terminal and the second device is a network device, the first key may be used to generate two-way authentication information between the terminal and the network device.

As described above, the ciphertext and/or the first authentication information may be obtained by using a random number (including the first random number and/or the second random number). The random number not only may enhance authentication security but also may help recognize and prevent a replay attack. The random number is likely different from a previously generated random number. Therefore, if a receiver finds that the first random number and/or the second random number corresponding to a transmission is the same as that corresponding to another transmission, the receiver may determine that a replay attack occurs and abandon reception of corresponding data.

To implement authentication, the first device may implement an authentication process based on the first authentication information. The authentication process may be two-way or one-way.

The following describes the one-way authentication. The one-way authentication may be implemented as that the first device performs security authentication on the second device, or that the second device performs security authentication on the first device.

During the one-way authentication, the first device may transmit a first authentication request to the second device. The first authentication request may be used to request the second device to perform the security authentication on the first device. The following describes a one-way authentication in detail by using an example in which the first device is an AIoT terminal and the second device is a network device. Upon initial access of the AIoT terminal, AIoT registration may trigger the network device to authenticate the AIoT terminal. For example, the AIoT terminal may transmit the first authentication request including the first authentication information. In an example in which a first algorithm includes an ASCON-AEAD algorithm, the AIoT terminal may calculate a ciphertext C and a verification tag T and transmit C and T to the network device through the first authentication request. Based on the first authentication request, the network device may authenticate and register the AIoT terminal. If the authentication and registration succeed, the network device may transmit an authentication response to the AIoT terminal. After receiving the authentication response, the AIoT terminal may or may not continue to authenticate the network device. If the AIoT terminal does not authenticate the network device, the foregoing process implements the one-way authentication performed by the network device on the AIoT terminal.

In a one-way authentication, the second device may transmit the first authentication request to the first device. This first authentication request may be used to request the first device to perform the security authentication on the second device. The following describes the one-way authentication in detail by using an example in which the second device is an AIoT terminal and the first device is a network device. After the AIoT terminal is successfully registered to the network device, the network device may trigger the AIoT terminal to authenticate the network device. For example, the network device may transmit an authentication request including the first authentication information to the AIoT terminal. In an example in which a first algorithm includes an ASCON-AEAD algorithm, the network device may calculate a ciphertext C and a verification tag T and transmit C and T to the AIoT terminal through the first authentication request. In response to receiving the authentication request, the AIoT terminal may authenticate the network device and generate a context. In a case that the authentication succeeds, the AIoT terminal may transmit an authentication response to the network device. After receiving the authentication response, the network device may continue to authenticate the AIoT terminal or may not authenticate the AIoT terminal. In a case that the network device does not authenticate the AIoT terminal, the foregoing process implements the one-way authentication performed by the AIoT terminal on the network device.

The following describes the two-way authentication. The two-way authentication may implement mutual authentication between the first device and the second device. In an example in which the first device is an AIoT terminal and the second device is a network device , a two-way authentication process may include authentication performed by the network device on the AIoT terminal, and authentication performed by the AIoT terminal on the network device. In some embodiments, the first device may transmit a first authentication request. The first authentication request may be used to request the two-way identity authentication between the first device and the second device. After receiving the first authentication request, the second device may generate second authentication information, and transmit the second authentication information to the first device through a first authentication response, so that the first device authenticates the second device. After the first device successfully authenticates the second device, the first device may transmit the first authentication information to the second device, so that the second device authenticates the first device. If the second device also successfully authenticates the first device, the two-way authentication process succeeds, and secure communication may be performed between the first device and the second device.

The following describes transmission of the first authentication request by using an example in which the second device includes a UDM. It may be understood that the UDM in the following embodiments may alternatively be replaced with another communications device having a function of storing or managing a shared key.

As an implementation, the UDM may directly receive, via an access network device, the first authentication request transmitted by the first device.

As an implementation, the first authentication request may be transmitted to the UDM via the access network device and one or more core network entities. After receiving the first authentication request, the one or more core network entities may forward the first authentication request to the UDM. The one or more core network entities may include one or more of the following: an AMF, an AUSF, an HSE, a UDR, a SEAF, or an NF specially configured to forward the first authentication request.

The first random number generated by the first device may be included in the first authentication request. After receiving the first random number, the second device may generate the second authentication information and/or the ciphertext.

Based on the first random number, a replay attack may further be recognized and avoided. As an implementation, after receiving the first random number, the second device may verify whether the first random number is the same as a historically received random number. In a case that the first random number received this time is the same as the historically received first random number, the second device may reject the first authentication request.

The second random number generated by the second device may be included in a first authentication reply. After receiving the second random number, the first device may generate the first authentication information and/or the ciphertext.

Based on the second random number, a replay attack may be recognized and avoided. As an implementation, after receiving the second random number, the first device may verify whether the second random number is the same as a historically received random number. In a case that the second random number received this time is the same as the historically received second random number, the first device may reject the first authentication request.

In some embodiments, the second device may further generate the second authentication information for the second device. For example, a second request may further be used to request to generate the second authentication information. In a case that the second device receives the second request, the second device may generate the second authentication information and the first key.

In some embodiments, the UDM may not generate the second authentication information. In a case that the UDM does not generate the second authentication information, another device may generate the second authentication information. In an example in which the second device includes an AF device, the AF device may generate the second authentication information. Response information to the second request transmitted by the UDM may include the second authentication information. If the response information to the second request received by the AF device does not include the second authentication information, the AF device may generate the second authentication information.

The following describes a method for generating the second authentication information. The method may be applied to any network device. For example, the method may be applied to the UDM or the AF device. The second authentication information may be generated by using a security algorithm or a key derivation function. For example, the second device may derive the second authentication information (for example, including a MAC) based on a security algorithm f1/f2/f3/f4/f5 specified in TS 35.206. An input of the security algorithm may include one or more of the following: the shared key, the first random number, the second random number, or the like. An output of the security algorithm may be a MAC. Alternatively, the second device may generate a MAC by using the key derivation function. An input of the key derivation function may include one or more of the following: the first key, the first random number, the length of the first random number, the second random number, the length of the second random number, or a fixed value allocated by a third party. For example, the fixed value may be FC = 0x7E.

The second device may transmit the second authentication information to the first device. After receiving the second authentication information, the first device may verify the second authentication information. In a case that the second authentication information is generated by the UDM through calculation, the first device may derive a new verification code to verify the second authentication information. In a case that the second authentication information is generated by the AF, the first device may derive the first key by using the shared key, and derive a new verification code based on the first key. A process of deriving the new verification code may be the same as a process of generating the second authentication information.

In some embodiments, the first device transmits the second authentication information to a security function module, so that the security function module performs verification. The security module may, for example, include a universal integrated circuit card (Universal Integrated Circuit Card, UICC). The process of deriving the new verification code may be performed by the security function module.

If the first device unsuccessfully verifies the second authentication information, the first device may reject to respond to an authentication request of the second device. In this case, the authentication process terminates. If the first device successfully verifies the second authentication information, the first device may continue the authentication process.

In some embodiments, the verification of the second authentication information may be combined with transmission of the first message. For example, in a case that the second authentication information is successfully verified, the first device may transmit the first message. In a case that the second authentication information is unsuccessfully verified, the first device may not transmit the first message.

In some embodiments, the shared key may be associated with the first identity of the first device. In the authentication process, the second device may receive the first identity, to determine the shared key associated with the first identity.

The first identity may be used to distinguish the first device from another communications device. A type of the first identity is not limited in this application. For example, the first identity may include one or more of the following identities of the first device: an AIoT identifier, an SUCI, or an SUPI.

In some implementations, the first device may transmit the first authentication request to the third device. The third device may verify the first authentication request, and if the verification succeeds, may forward the first authentication request to the second device. If the verification fails, the third device may reject the first authentication request. In a case that the first authentication request is rejected, the third device may not transmit the first authentication request to the second device.

In a case that the third device transmits the first authentication request, the transmitted first authentication request may be a first authentication request processed by the third device. For example, the processed first authentication request may include information about the third device. As a possible implementation, the processed first authentication request may include a second identity. The second identity may, for example, include an SUCI of the third device.

A manner of verifying the first authentication request by the third device is not limited in this application. As a possible implementation, the third device may manage a mapping relationship between the second identity of the third device and the first identity. In some embodiments, the third device may share the mapping relationship with the second device. The third device may perform verification based on whether the mapping relationship exists between the first identity and the second identity of the third device. In a case that the mapping relationship exists between the first identity and the second identity, the verification may succeed. In a case that the mapping relationship does not exist between the first identity and the second identity, the verification may not succeed.

In some embodiments, the first authentication request may be transmitted by the first device.

In some embodiments, the transmission of the first authentication request may be triggered by the second device or the third device. That is, the second device and/or the third device may proactively wake up the first device, thereby causing the first device to transmit the first authentication request. Information for waking up the first device may be first trigger information. In response to the first device receiving the first trigger information, the first device may transmit the first authentication request. For example, when the third device and/or the second device has a service need, the third device and/or the second device may wake up the first device.

To facilitate understanding of this application, this application is described in detail below by using Embodiment 1 to Embodiment 5.

### Embodiment 1

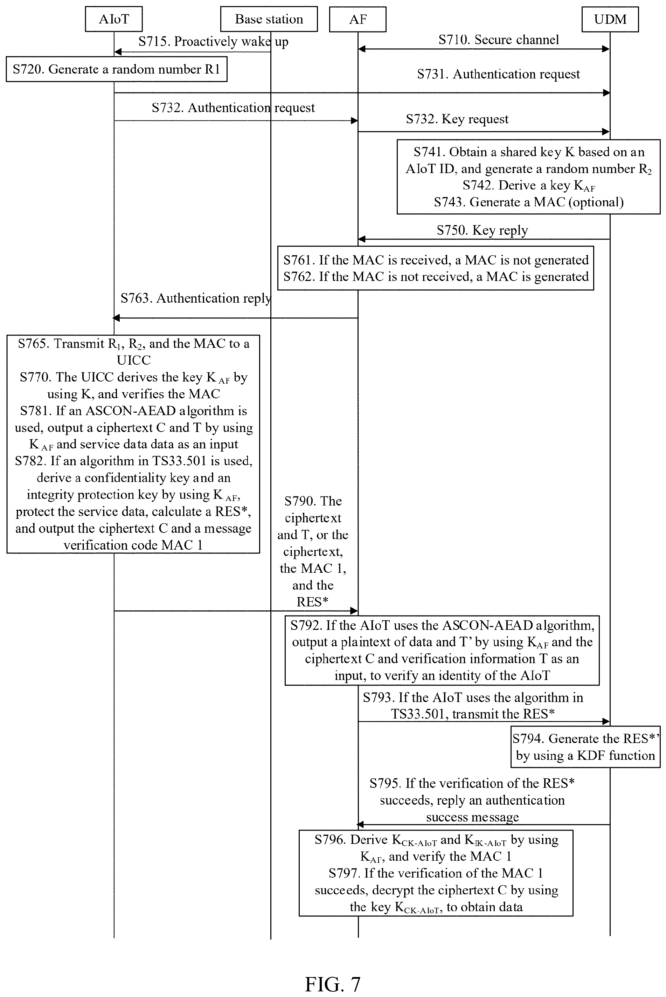

FIG. 7 is a schematic flowchart of a communication method according to an embodiment of this application. The method shown in FIG. 7 may be performed by an AIoT terminal, an access network device, an AF device, and a UDM.

The AF device in Embodiment 1 is merely an example. That is, the AF device in Embodiment 1 may be replaced by one or more of the following: an AMF, an AUSF, an HSE, a UDR, a SEAF, or a core network-specific NF.

The AIoT terminal and the UDM share a shared key K and an AIoT ID.

The method shown in FIG. 7 may include steps S710 to S797.

Step S710: Establish a secure channel between the AF device and the UDM.

Step S715: When a network device has a service need, the access network device proactively wakes up the AIoT terminal.

Step S720: The AIoT terminal generates a random number R₁.

Step S730: The AIoT terminal transmits an authentication request message. The authentication request is a first authentication request and includes an ID and R₁ of the AIoT terminal.

Step S730 may include step S731 or step S732.

Step S731: The AIoT terminal directly transmits the authentication request message to the UDM via the access network device. The authentication request message includes the AIoT ID and the random number R₁.

Step S732: The AIoT transmits the authentication request message to the AF device via the access network device. The authentication request message includes the AIoT ID and the random number R₁. After receiving this message, the AF transmits a key request message to the UDM. The key request message includes the AIoT ID and the random number R₁.

Step S740: After receiving the key request message or the authentication request message, the UDM derives a key K_{AF}.

Step S740 may, for example, include step S741 and step S742.

Step S741: The UDM obtains the shared key K based on the AIoT ID, and generates a random number R₂.

Step S742: The UDM derives the key K_{AF} based on a key derivation function KDF. An input parameter of the key derivation function KDF includes parameters such as the shared key K, the AIoT ID, a length of the AIoT ID, the random number R₁, a length of the random number R₁, the random number R₂, a length of the random number R₂, and a fixed value allocated by a third party, for example, FC = 0x7E.

Optionally, step S740 may further include step S743.

Step S743: The UDM derives a MAC based on a security algorithm f1/f2/f3/f4/f5 specified in TS 35.206. An input of the security algorithm includes parameters such as the key K, the random number R₁, and the random number R₂.

Step S750: The UDM transmits a key reply message to the AF device. The key reply message may include K_{AF} and the random number R₂. Optionally, the key reply message may further include a MAC.

Step S760: The AF device performs a corresponding operation based on the key reply message.

Step S760 may include step S761 or step S762.

Step S761: If the key reply message includes the MAC, the AF device does not generate a MAC and directly forwards the message to the AIoT terminal.

Step S762: If the key reply message does not include the MAC, the AF device generates a MAC by using the function f1 or the key derivation function.

If the function f1 is used, an input parameter includes K_{AF}, the random number R₁, and the random number R₂. If the key derivation function is used, an input parameter includes K_{AF}, the random number R₁, the length of the random number R₁, the random number R₂, the length of the random number R₂, and a fixed value allocated by a third party, for example, FC = 0x7E.

Step S760 further includes step S763. Step S763: The AF device transmits an authentication reply message to the AIoT terminal, where the message includes the random number R₂ and the MAC.

Step S770: The AIoT terminal verifies the MAC.

Before step S770, step S765 may be included. Step S765: After receiving the authentication reply message, the AIoT terminal may transmit the random number R₁, the random number R₂, and the MAC to a security function module (for example, a UICC; and if no security function module exists, no transmission operation is required) of the AIoT terminal.

Step S770 may include step S771 or step S772.

Step S771: If the MAC is generated by the UDM through calculation, the security function module derives a new verification code to verify the MAC. The process in which the AIoT terminal derives the key K_{AF} and generates the new verification code is the same as that on a network device side.

Step S772: If the MAC is generated by the AF device through calculation, the security function module derives the key K_{AF} by using the shared key K and generates a new verification code to verify the MAC. The process in which the AIoT terminal derives the key K_{AF} and generates the new verification code is the same as that on a network device side.

After completing step S770, if the verification of the MAC fails, the AIoT terminal rejects to respond to the authentication reply message, and the procedure terminates. If the verification of the MAC succeeds, the AIoT terminal may perform step S780.

Step S780 may include step S781 or step S782.

Step S781: If the AIoT uses an ASCON-AEAD algorithm as a cryptographic algorithm, the AIoT terminal outputs a ciphertext C and a verification tag T by using the ASCON-AEAD algorithm, and transmits the ciphertext C and the verification tag T to the AF. An input of the ASCON-AEAD algorithm includes K_{AF} and service data "data".

Step S782: If the AIoT terminal uses a confidentiality and integrity protection algorithm in TS33.501, the AIoT terminal generates a confidentiality key K_{CK-AIoT} and an integrity key K_{IK-AIoT} by using the key derivation function KDF. An input parameter of the algorithm includes K_{AF}, an encryption algorithm identifier/integrity protection algorithm identifier, a length of the encryption algorithm identifier/integrity protection algorithm identifier, a fixed value allocated by a third party (for example, FC = 0x7E), and an identifier of a key to be outputted. For example, if the confidentiality key K_{CK-AIoT} is to be outputted, the identifier of the key to be outputted is 0x00; or if the integrity key K_{IK-AIoT} is to be outputted, the identifier of the key to be outputted is 0x01. An output of the algorithm includes information such as a length of the identifier of the key to be outputted, the random number R₁, the length of the random number R₁, the random number R₂, and the length of the random number R₂. The AIoT generates the ciphertext C after encrypting the service data "data" by using the key K_{CK-AIoT}, and then performs integrity protection on the ciphertext C by using the key K_{IK-AIoT}, to generate a verification code MAC 1. The AIoT terminal generates a RES* by using the KDF function. An input parameter of the KDF function includes the shared key K, the random number R₁, the random number R₂, the length of R₁, the length of R₂, a RES, a length of the RES, or a fixed value allocated by a third party (for example, FC = 0x6B). The AIoT terminal generates the RES by using the function f2, and the input parameter includes a root key K and the random number R₂.

Step S790: The AIoT terminal transmits C, the MAC 1, and the RES* to the AF device. Alternatively, the AIoT terminal transmits C and T to the AF device.

After step S790, the AF may perform step S792 or step S793.

Step S792: If the AIoT uses the ASCON-AEAD algorithm, the AF outputs a plaintext of service data "data" and verification information T' based on the ASCON-AEAD algorithm by using K_{AF}, the ciphertext C, and the verification tag T as an input. If verification of T fails, an identity of the AIoT terminal is invalid, and the AF device rejects the message in step S790. If the AF obtains a normal output, an identity of the AIoT terminal is valid, and the AF device may further receive the message in step S790.

Step S793: If the AIoT uses the confidentiality and integrity protection algorithm in TS33.501, the AF forwards the RES* to the UDM.

After step S793, the UDM may perform steps S794 and S795.

Step S794: The UDM generates a RES*' by using the KDF function, to verify the RES*. A generation process is the same as that of the RES* on an AIoT side.

Step S795: If the verification of the RES* succeeds, the UDM replies to the AF device with an authentication success message. If the verification of the RES* fails, the UDM rejects the message transmitted by the AF device.

After step S795, the AF device may perform steps S796 and S797.

Step S796: After receiving the authentication success message, the AF device generates the confidentiality key K_{CK-AIoT} and the integrity key K_{IK-AIoT} by using the key derivation function KDF. The derivation process is the same as that on the AIoT side.

Step S797: The AF device verifies the MAC 1 by using the key K_{IK-AIoT}. If the verification of the MAC 1 succeeds, the AF device decrypts the ciphertext C by using the key K_{CK-AIoT}, to obtain "data". If the verification of the MAC 1 fails, the AF device rejects the authentication success message.

### Embodiment 2

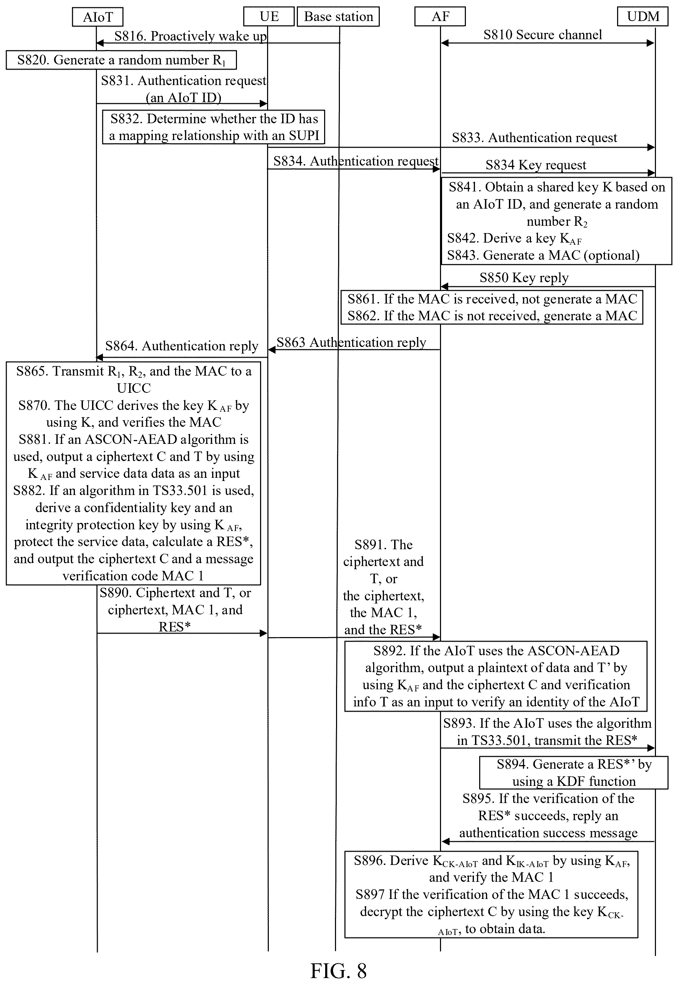

FIG. 8 is a schematic flowchart of a communication method according to Embodiment 2. The method shown in FIG. 7 may be performed by an AIoT terminal, a common terminal (represented by a UE in FIG. 8), an access network device, an AF device, and a UDM. The UE is an agent node between the AIoT terminal and a network device side.

The AF device in Embodiment 2 is merely an example. The AF device in Embodiment 2 may be replaced by one or more of the following: an AMF, an AUSF, an HSE, a UDR, a SEAF, or a core network-specific NF.

The AIoT terminal and the UDM share a key K. The AIoT terminal has no SUPI, but shares an AIoT ID with the UE. The UE manages a mapping relationship between an SUPI and the AIoT ID. The UE further shares the mapping relationship with the UDM.

The method shown in FIG. 8 may include step S810 to step S897.

Step S810: Establish a secure channel between the AF device and the UDM.

Step S816: When a network device side and/or the UE has a service need, the access network device and/or the UE proactively wakes up the AIoT terminal.

Step S820: The AIoT terminal generates a random number R₁.

Step S830: The AIoT terminal transmits an authentication request message to the UDM. The authentication request is a first authentication request and includes an ID and R₁ of the AIoT terminal.

Step S830 may include steps S831 and S832.

Step S831: The AIoT terminal transmits the first authentication request message to the UE.

Step S832: After receiving the first authentication request, the UE first determines whether the AIoT ID has a mapping relationship with the SUPI of the UE. If no mapping relationship exists, the UE rejects the request from the AIoT terminal. If the mapping relationship exists, the UE performs step S833 or step S834.

Step S833: The UE directly transmits an authentication request message to the UDM by using the access network device. The authentication request message includes an SUCI obtained by encrypting the SUPI of the UE, the AIoT ID, and the random number R₁.

Step S834: The UE transmits the authentication request message to the AF device by using the access network device. The authentication request message includes an SUCI obtained by encrypting the SUPI of the UE, the AIoT ID, and the random number R₁. After receiving the message, the AF transmits a key request message to the UDM. The key request message includes an SUCI, the AIoT ID, and the random number R₁.

Step S840: After receiving the key request message or the authentication request message, the UDM derives a key K_{AF}.

Step S840 may, for example, include step S841 and step S842.

Step S841: The UDM obtains the shared key K based on the AIoT ID, and generates a random number R₂.

The UDM may decrypt the SUCI carried in the message, to obtain an SUPI, and obtains the shared key K between the UDM and the AIoT based on a mapping relationship between the SUPI and the AIoT ID.

Step S842: The UDM derives the key K_{AF} based on a key derivation function KDF. An input parameter of the key derivation function KDF includes parameters such as the shared key K, the AIoT ID, a length of the AIoT ID, the random number R₁, a length of the random number R₁, the random number R₂, a length of the random number R₂, and a fixed value allocated by a third party, for example, FC = 0x7E.

Optionally, step S840 may further include step S843.

Step S843: The UDM derives a MAC based on a security algorithm f1/f2/f3/f4/f5 specified in TS 35.206. An input of the security algorithm includes parameters such as the key K, the random number R₁, and the random number R₂.

Step S850: The UDM transmits a key reply message to the AF device. The key reply message may include K_{AF} and the random number R₂. Optionally, the key reply message may further include the MAC.

Step S860: The AF device performs a corresponding operation based on the key reply message.

Step S860 may include step S861 or step S862.

Step S861: If the key reply message includes the MAC, the AF device does not generate a MAC and directly forwards the message to the AIoT terminal.

Step S862: If the key reply message does not include the MAC, the AF device generates a MAC by using the function f1 or the key derivation function.

If the function f1 is used, an input parameter includes K_{AF}, the random number R₁, and the random number R₂. If the key derivation function is used, the input parameter includes K_{AF}, the random number R₁, the length of the random number R₁, the random number R₂, the length of the random number R₂, and a fixed value allocated by a third party, for example, FC = 0x7E.

Step S860 further includes steps S863 and S864.

Step S863: The AF device transmits an authentication reply message to the AIoT terminal, where the message includes the AIoT ID, the random number R₂, and the MAC.

Step S864: After receiving the authentication reply message, the UE forwards the authentication reply message to the AIoT.

Step S870: The AIoT terminal verifies the MAC.

Before step S870, step S865 may be included. Step S865: After receiving the authentication reply message, the AIoT terminal may transmit the random number R₁, the random number R₂, and the MAC to a security function module (for example, a UICC; and if no security function module exists, no transmission operation is required) of the AIoT terminal.

Step S870 may include step S881 or step S882.

Step S871: If the MAC is generated by the UDM through calculation, the security function module derives a new verification code to verify the MAC. The process in which the AIoT terminal derives the key K_{AF} and generates the new verification code is the same as that on a network device side.

Step S872: If the MAC is generated by the AF device through calculation, the security function module derives the key K_{AF} by using the shared key K and generates a new verification code to verify the MAC. The process in which the AIoT terminal derives the key K_{AF} and generates the new verification code is the same as that on a network device side.

After completing step S870, if the verification of the MAC fails, the AIoT terminal rejects to respond to the authentication reply message, and the procedure terminates. If the verification of the MAC succeeds, the AIoT terminal may perform step S880.

Step S880 may include step S881 or step S882.

Step S881: If the AIoT uses an ASCON-AEAD algorithm as a cryptographic algorithm, the AIoT terminal outputs a ciphertext C and a verification tag T by using the ASCON-AEAD algorithm, and transmits the ciphertext C and the verification tag T to the AF. An input of the ASCON-AEAD algorithm includes K_{AF} and service data "data".

Step S882: If the AIoT terminal uses a confidentiality and integrity protection algorithm in TS33.501, the AIoT terminal generates a confidentiality key K_{CK-AIoT} and an integrity key K_{IK-AIoT} by using the key derivation function KDF. An input parameter of the algorithm includes K_{AF}, an encryption algorithm identifier/integrity protection algorithm identifier, a length of the encryption algorithm identifier/integrity protection algorithm identifier, a fixed value allocated by a third party (for example, FC = 0x8E), and an identifier of a key to be outputted. For example, if the confidentiality key K_{CK-AIoT} is to be outputted, the identifier of the key to be outputted is 0x00; or if the integrity key K_{IK-AIoT} is to be outputted, the identifier of the key to be outputted is 0x01. An output of the algorithm includes information such as a length of the identifier of the key to be outputted, the random number R₁, the length of the random number R₁, the random number R₂, and the length of the random number R₂. The AIoT generates the ciphertext C by encrypting the service data "data" by using the key K_{CK-AIoT}, and then performs integrity protection on the ciphertext C by using the key K_{IK-AIoT}, to generate a verification code MAC 1. The AIoT terminal generates a RES* by using the KDF function. An input parameter of the KDF function includes the shared key K, the random number R₁, the random number R₂, the length of R₁, the length of R₂, a RES, a length of the RES, or a fixed value allocated by a third party (for example, FC = 0x6B). The AIoT terminal generates the RES by using the function f2, and the input parameter includes a root key K and the random number R₂.

Step S890: The AIoT terminal transmits C, the MAC 1, and the RES* to the UE. Alternatively, the AIoT terminal transmits C and T to the UE.

Step S891: The UE transmits C, the MAC 1, and the RES* to the AF device. Alternatively, the UE transmits C and T to the AF device.

After step S890 or S891, the AF device may perform step S892 or step S893.

Step S892: If the AIoT uses the ASCON-AEAD algorithm, the AF outputs a plaintext of service data "data" and verification information T' based on the ASCON-AEAD algorithm by using K_{AF}, the ciphertext C, and the verification tag T as an input. If verification of T fails, an identity of the AIoT terminal is invalid, and the AF device rejects the message in step S890. If the AF obtains a normal output, an identity of the AIoT terminal is valid, and the AF device may further receive the message in step S890.

Step S893: If the AIoT uses the confidentiality and integrity protection algorithm in TS33.501, the AF forwards the RES* to the UDM.

After step S893, the UDM may perform steps S894 and S895.

Step S894: The UDM generates a RES*' by using the KDF function, to verify the RES*. A generation process is the same as that of the RES* on an AIoT side.

Step S895: If the verification of the RES* succeeds, the UDM replies an authentication success message to the AF device. If the verification of the RES* fails, the UDM rejects the message transmitted by the AF device.

After step S895, the AF device may perform steps S896 and S897.

Step S896: After receiving the authentication success message, the AF device generates the confidentiality key K_{CK-AIoT} and the integrity key K_{IK-AIoT} by using the key derivation function KDF. The derivation process is the same as that on the AIoT side.

Step S897: The AF device verifies the MAC 1 by using the key K_{IK-AIoT}. If the verification of the MAC 1 succeeds, the AF device decrypts the ciphertext C by using the key K_{CK-AIoT}, to obtain "data". If the verification of the MAC 1 fails, the AF device rejects the authentication success message.

### Embodiment 3

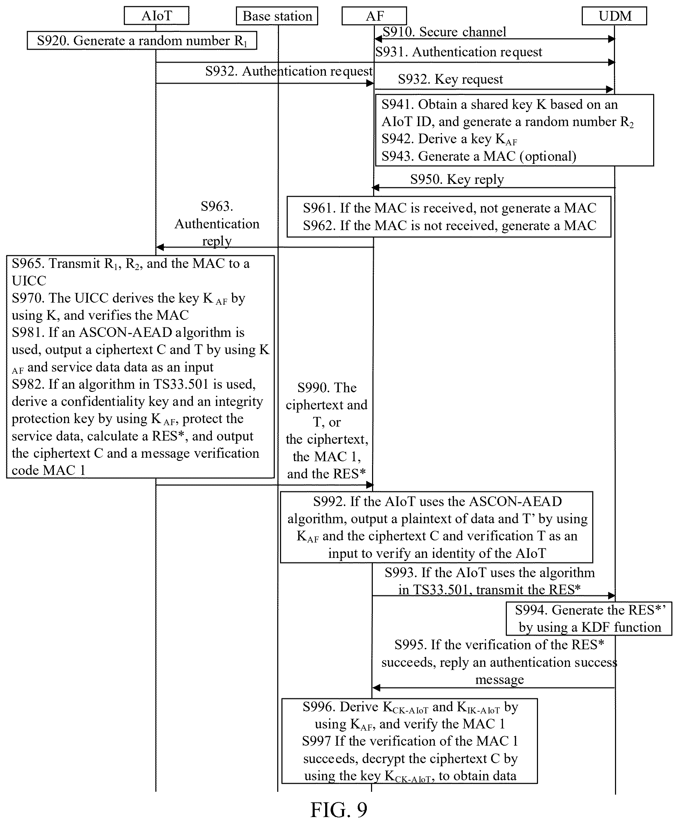

FIG. 9 is a schematic flowchart of a communication method according to Embodiment 3. The method shown in FIG. 9 may be performed by an AIoT terminal, an access network device, an AF device, and a UDM.

The AF device in Embodiment 3 is merely an example. The AF device in Embodiment 3 may be replaced by one or more of the following: an AMF, an AUSF, an HSE, a UDR, a SEAF, or a core network-specific NF.

The AIoT terminal and the UDM share a shared key K and an AIoT ID.

The method shown in FIG. 7 may include steps S910 to S997.

Step S910: Establish a secure channel between the AF device and the UDM.

Step S915: When a network device side has a service need, the access network device proactively wakes up the AIoT terminal.

Step S920: When the AIoT terminal needs to proactively transmit an authentication request, the AIoT terminal generates a random number R₁.

Step S930: The AIoT terminal transmits an authentication request message. The authentication request is a first authentication request and includes an ID and R₁ of the AIoT terminal.

Step S930 may include step S931 or step S932.

Step S931: The AIoT terminal directly transmits the authentication request message to the UDM via the access network device. The authentication request message includes the AIoT ID and the random number R₁.

Step S932: The AIoT transmits the authentication request message to the AF device by using the access network device. The authentication request message includes the AIoT ID and the random number R₁. After receiving this message, the AF transmits a key request message to the UDM. The key request message includes the AIoT ID and the random number R₁.

Step S940: After receiving the key request message or the authentication request message, the UDM derives a key K_{AF}.

Step S940 may, for example, include step S941 and step S942.

Step S941: The UDM obtains the shared key K based on the AIoT ID, and generates a random number R₂.

Step S942: The UDM derives the key K_{AF} based on a key derivation function KDF. An input parameter of the key derivation function KDF includes parameters such as the shared key K, the AIoT ID, a length of the AIoT ID, the random number R₁, a length of the random number R₁, the random number R₂, a length of the random number R₂, and a fixed value allocated by a third party, for example, FC = 0x7E.

Optionally, step S940 may further include step S943.

Step S943: The UDM derives a MAC based on a security algorithm f1/f2/f3/f4/f5 specified in TS 35.206. An input of the security algorithm includes parameters such as the key K, the random number R₁, and the random number R₂.

Step S950: The UDM transmits a key reply message to the AF device. The key reply message may include K_{AF} and the random number R₂. Optionally, the key reply message may further include a MAC.

Step S960: The AF device performs a corresponding operation based on the key reply message.

Step S960 may include step S961 or step S962.

Step S961: If the key reply message includes the MAC, the AF device does not generate a MAC and directly forwards the message to the AIoT terminal.

Step S962: If the key reply message does not include the MAC, the AF device generates a MAC by using the function f1 or the key derivation function.

If the function f1 is used, an input parameter includes K_{AF}, the random number R₁, and the random number R₂. If the key derivation function is used, the input parameter includes K_{AF}, the random number R₁, the length of the random number R₁, the random number R₂, the length of the random number R₂, and a fixed value allocated by a third party, for example, FC = 0x7E.

Step S960 further includes step S963. Step S963: The AF device transmits an authentication reply message to the AIoT terminal, where the message includes the random number R₂ and the MAC.

Step S970: The AIoT terminal verifies the MAC.

Before step S970, step S965 may be included. Step S965: After receiving the authentication reply message, the AIoT terminal may transmit the random number R₁, the random number R₂, and the MAC to a security function module (for example, a UICC; and if no security function module exists, no transmission operation is required) of the AIoT terminal.

Step S970 may include step S971 or step S972.

Step S971: If the MAC is generated by the UDM through calculation, the security function module derives a new verification code to verify the MAC. The process in which the AIoT terminal derives the key K_{AF} and generates the new verification code is the same as that on a network device side.

Step S972: If the MAC is generated by the AF device through calculation, the security function module derives the key K_{AF} by using the shared key K and generates a new verification code to verify the MAC. The process in which the AIoT terminal derives the key K_{AF} and generates the new verification code is the same as that on a network device side.

After completing step S970, if the verification of the MAC fails, the AIoT terminal rejects to respond to the authentication reply message, and the procedure terminates. If the verification of the MAC succeeds, the AIoT terminal may perform step S980.

Step S980 may include step S981 or step S982.

Step S981: If the AIoT uses an ASCON-AEAD algorithm as a cryptographic algorithm, the AIoT terminal outputs a ciphertext C and a verification tag T by using the ASCON-AEAD algorithm, and transmits the ciphertext C and the verification tag T to the AF. An input of the ASCON-AEAD algorithm includes K_{AF} and service data "data".

Step S982: If the AIoT terminal uses a confidentiality and integrity protection algorithm in TS33.501, the AIoT terminal generates a confidentiality key K_{CK-AIoT} and an integrity key K_{IK-AIoT} by using the key derivation function KDF. An input parameter of the algorithm includes K_{AF}, an encryption algorithm identifier/integrity protection algorithm identifier, a length of the encryption algorithm identifier/integrity protection algorithm identifier, a fixed value allocated by a third party (for example, FC = 0x7E), and an identifier of a key to be outputted. For example, if the confidentiality key K_{CK-AIoT} is to be outputted, the identifier of the key to be outputted is 0x00; or if the integrity key K_{IK-AIoT} is to be outputted, the identifier of the key to be outputted is 0x01. An output of the algorithm includes information such as a length of the identifier of the key to be outputted, the random number R₁, the length of the random number R₁, the random number R₂, and the length of the random number R₂. The AIoT generates the ciphertext C after encrypting the service data "data" by using the key K_{CK-AIoT}, and then performs integrity protection on the ciphertext C by using the key K_{IK-AIoT}, to generate a verification code MAC 1. The AIoT terminal generates a RES* by using the KDF function. An input parameter of the KDF function includes the shared key K, the random number R₁, the random number R₂, the length of R₁, the length of R₂, a RES, a length of the RES, or a fixed value allocated by a third party (for example, FC = 0x6B). The AIoT terminal generates the RES by using the function f2, and the input parameter includes a root key K and the random number R₂.

Step S990: The AIoT terminal transmits C, the MAC 1, and the RES* to the AF device. Alternatively, the AIoT terminal transmits C and T to the AF device.

After step S990, the AF may perform step S992 or step S993.

Step S992: If the AIoT uses the ASCON-AEAD algorithm, the AF outputs a plaintext of service data "data" and verification information T' based on the ASCON-AEAD algorithm by using K_{AF}, the ciphertext C, and the verification tag T as an input. If verification of T fails, an identity of the AIoT terminal is invalid, and the AF device rejects the message in step S990. If the AF obtains a normal output, an identity of the AIoT terminal is valid, and the AF device may further receive the message in step S990.

Step S993: If the AIoT uses the confidentiality and integrity protection algorithm in TS33.501, the AF forwards the RES* to the UDM.

After step S993, the UDM may perform steps S994 and S995.

Step S994: The UDM generates a RES*' by using the KDF function, to verify the RES*. A generation process is the same as that of the RES* on an AIoT side.

Step S995: If the verification of the RES* succeeds, the UDM replies to the AF device with an authentication success message. If the verification of the RES* fails, the UDM rejects the message transmitted by the AF device.

After step S995, the AF device may perform steps S996 and S997.

Step S996: After receiving the authentication success message, the AF device generates the confidentiality key K_{CK-AIoT} and the integrity key K_{IK-AIoT} by using the key derivation function KDF. The derivation process is the same as that on the AIoT side.

Step S997: The AF device verifies the MAC 1 by using the key K_{IK-AIoT}. If the verification of the MAC 1 succeeds, the AF device decrypts the ciphertext C by using the key K_{CK-AIoT}, to obtain "data". If the verification of the MAC 1 fails, the AF device rejects the authentication success message.

### Embodiment 4

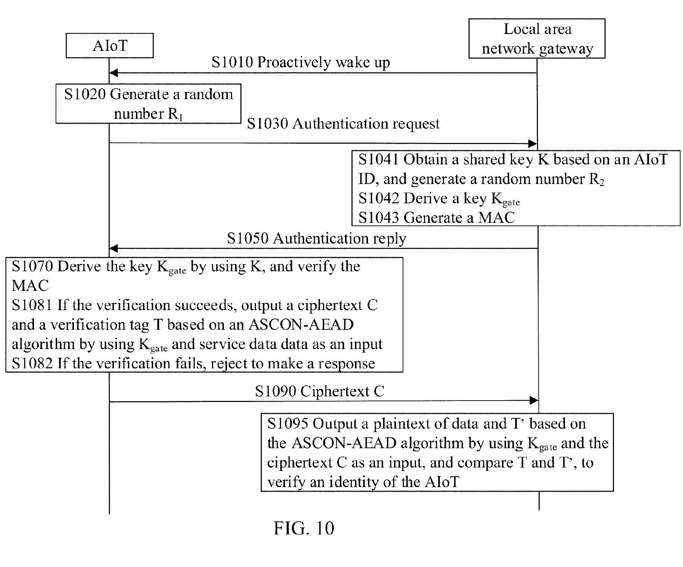

FIG. 10 is a schematic flowchart of a communication method according to Embodiment 4. The method shown in FIG. 10 may be performed by an AIoT terminal and a local area network gateway (for example, a gateway in a WLAN network). The AIoT terminal and the local area network gateway share a key K and an AIoT ID.

The method shown in FIG. 10 may include steps S1010 to S1095.

Step S1010: When the gateway has a service need, the gateway proactively wakes up the AIoT terminal.

Step S1020: The AIoT terminal generates a random number R₁.

Step S1030: The AIoT terminal transmits an authentication request message to the gateway. The authentication request message includes the AIoT ID and the random number R₁.

Step S1040: The local area network gateway generates authentication information MAC. Step S1040 may include steps S1041 to S1043.

Step S1041: After receiving the authentication request message, the gateway obtains K based on the AIoT ID, and generates a random number R₂.

Step S1042: The gateway derives a key K_{gate} based on a key derivation function KDF. An input parameter of the key derivation function KDF includes parameters such as the key K, the AIoT ID, a length of the AIoT ID, the random number R₁, a length of the random number R₁, the random number R₂, a length of the random number R₂, and a fixed value allocated by a third party, for example, FC = 0x7E.

Step S1043: The gateway generates the MAC by using a function f1 or the key derivation function. If the function f1 is used, an input parameter includes K_{gate}, the random number R₁, and the random number R₂. If the key derivation function is used, the input parameter includes K_{gate}, the random number R₁, a length of the random number R₁, the random number R₂, a length of the random number R₂, and a fixed value allocated by a third party (for example, FC = 0x7E).

Step S1050: The gateway transmits an authentication reply message to the AIoT terminal. The authentication reply message includes the random number R₂ and the MAC.

Step S1070: The AIoT terminal derives the key K_{gate} by using K, and verifies the MAC.

After receiving the authentication reply message, the AIoT terminal derives the key K_{gate} by using the shared key K, and generates a new verification code to verify the MAC. The process in which the terminal derives the key K_{gate} and generates the new verification code is the same as that of the gateway.

Step S1081: If the verification of the MAC succeeds, the AIoT terminal outputs a ciphertext C and a verification tag T by using an ASCON-AEAD algorithm. An input of the algorithm includes K_{gate} and service data "data".

Step S1082: If the verification of the MAC fails, the AIoT terminal rejects to respond to the authentication reply message, and the procedure terminates.

After step S1081, perform step S1090. Step S1090: The AIoT terminal transmits the ciphertext C and/or the verification tag T to the gateway.

Step S1095: After receiving the ciphertext C, the gateway outputs a plaintext of service data "data" and verification information T' based on the ASCON-AEAD algorithm by using K_{gate}, the ciphertext C, and the verification tag T as an input. The verification tag T is verified by using the verification information T'. If the verification of T fails, an identity of the AIoT terminal is invalid, and the message is rejected. If the gateway obtains a normal output, an identity of the AIoT terminal is valid, and the message is received.

### Embodiment 5

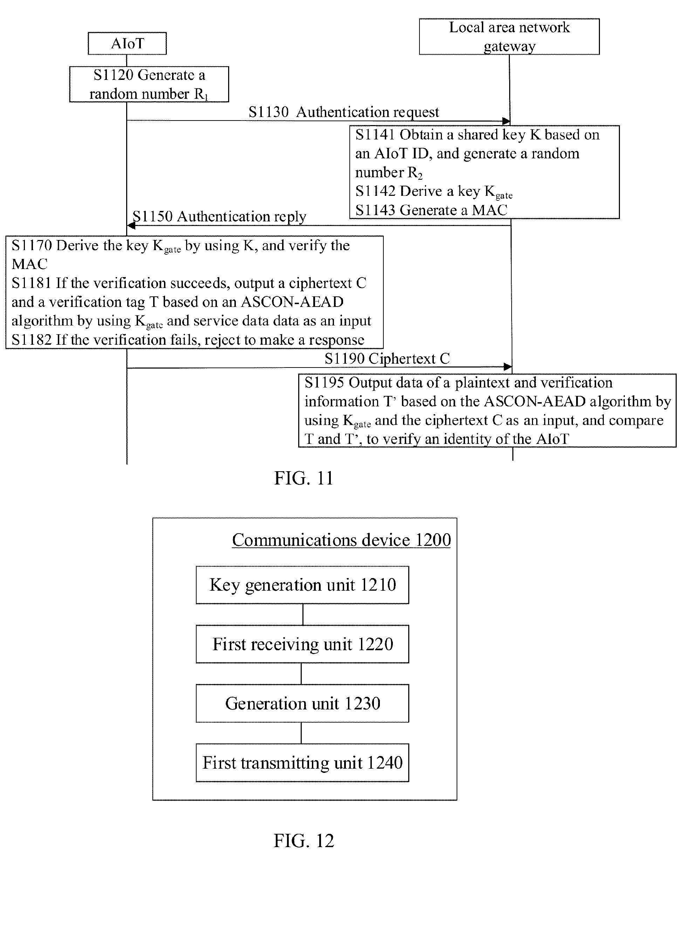

FIG. 11 is a schematic flowchart of a communication method according to Embodiment 4 of this application. The method shown in FIG. 11 may be performed by an AIoT terminal and a local area network gateway (for example, a gateway in a WLAN network). The AIoT terminal and the local area network gateway share a key K and an AIoT ID.

The method shown in FIG. 10 may include steps S1120 to S1195.

Step S1120: The AIoT terminal generates a random number R₁.

Step S1130: The AIoT terminal proactively transmits an authentication request message to the gateway. The authentication request message includes the AIoT ID and the random number R₁.

Step S1140: The local area network gateway generates authentication information MAC. Step S1140 may include steps S1141 to S1143.

Step S1141: After receiving the authentication request message, the gateway obtains K based on the AIoT ID, and generates a random number R₂.

Step S1142: The gateway derives a key K_{gate} based on a key derivation function KDF. An input parameter of the key derivation function KDF includes parameters such as the key K, the AIoT ID, a length of the AIoT ID, the random number R₁, a length of the random number R₁, the random number R₂, a length of the random number R₂, and a fixed value allocated by a third party, for example, FC = 0x7E.

Step S1143: The gateway generates the MAC by using a function f1 or the key derivation function. If the function f1 is used, an input parameter includes K_{gate}, the random number R₁, and the random number R₂. If the key derivation function is used, the input parameter includes K_{gate}, the random number R₁, a length of the random number R₁, the random number R₂, a length of the random number R₂, and a fixed value allocated by a third party (for example, FC = 0x7E).

Step S1150: The gateway transmits an authentication reply message to the AIoT terminal. The authentication reply message includes the random number R₂ and the MAC.

Step S1170: The AIoT terminal derives the key K_{gate} by using K, and verifies the MAC.

After receiving the authentication reply message, the AIoT terminal derives the key K_{gate} by using the shared key K, and generates a new verification code to verify the MAC. The process in which the terminal derives the key K_{gate} and generates the new verification code is the same as that of the gateway.

Step S1181: If the verification of the MAC succeeds, the AIoT terminal outputs a ciphertext C and a verification tag T by using an ASCON-AEAD algorithm. An input of the algorithm includes K_{gate} and service data.

Step S1182: If the verification of the MAC fails, the AIoT terminal rejects to respond to the authentication reply message, and the procedure terminates.

After step S1181, perform step S1190. Step S1190: The AIoT terminal transmits the ciphertext C and/or the verification tag T to the gateway.

Step S1195: After receiving the ciphertext C, the gateway outputs a plaintext of service data and verification information T' based on the ASCON-AEAD algorithm by using K_{gate}, the ciphertext C, and the verification tag T as an input. The verification tag T is verified by using the verification information T'. If the verification of T fails, an identity of the AIoT terminal is invalid, and the message is rejected. If a gateway A obtains a normal output, an identity of the AIoT terminal is valid, and the message is received.

The foregoing describes the method embodiments of this application in detail. The following describes apparatus embodiments of this application in detail. It should be understood that the description of the method embodiments corresponds to the description of the apparatus embodiments, and therefore, for a part that is not described in detail, reference may be made to the foregoing method embodiments.

FIG. 12 is a schematic diagram of a structure of a communications device 1200 according to an embodiment of this application. The communications device 1200 is a first device. The communications device 1200 includes a key generation unit 1210, a first receiving unit 1220, a generation unit 1230, and a first transmitting unit 1240.

The key generation unit 1210 is configured to generate a first key based on a shared key.

The first receiving unit 1220 is configured to receive a second random number of a second device.

The generation unit 1230 is configured to generate first authentication information of the first device based on the first key.

The first transmitting unit 1240 is configured to transmit a first message to the second device. The first message includes the first authentication information.

The first authentication information is generated by using one or more of the following information: service-related information of the first device, an identity of a device that forwards the first message, a first random number of the first device, or the second random number.

In some embodiments, the generation unit 1230 is further configured to generate, based on the first key, a ciphertext corresponding to service data. The first message further includes the ciphertext.

In some embodiments, both the ciphertext and the first authentication information are generated based on a first algorithm.

In some embodiments, the communications device 1200 is further configured to generate a second key and a third key based on the first key. The second key is different from the third key. The generation unit 1220 is further configured to: generate the ciphertext based on the second key; and generate the first authentication information based on the third key.

In some embodiments, the first key is further used to generate second authentication information for the second device.

In some embodiments, the communications device 1200 is further configured to transmit a first authentication request. The first authentication request is used to request two-way identity authentication between the first device and the second device.

In some embodiments, the communications device 1200 is further configured to: receive a first authentication reply transmitted by the second device, where the first authentication reply is used to reply to the first authentication request, and the first authentication reply includes the second random number; verify whether the second random number is the same as a historically received random number; and in a case that the second random number is the same as the historically received random number, reject to respond to the first authentication reply.

In some embodiments, the first authentication reply further includes second authentication information of the second device, and the communications device is further configured to: verify the second authentication information; and in a case that the verification of the second authentication information fails, reject to respond to the first authentication reply.

In some embodiments, the first authentication request includes a first identity of the first device, and the first identity is associated with the shared key.

In some embodiments, the first identity includes one or more of the following identities of the first device: an AIoT identifier, an SUCI, or an SUPI.

In some embodiments, the first authentication request is transmitted via a third device, and the first authentication request is rejected in a case that no mapping relationship exists between the first identity and a second identity of the third device.

In some embodiments, the transmitting the first authentication request includes: transmitting the first authentication request in response to the first device receiving first trigger information.

In some embodiments, the first device is an AIoT terminal, and the second device includes one or more network devices.

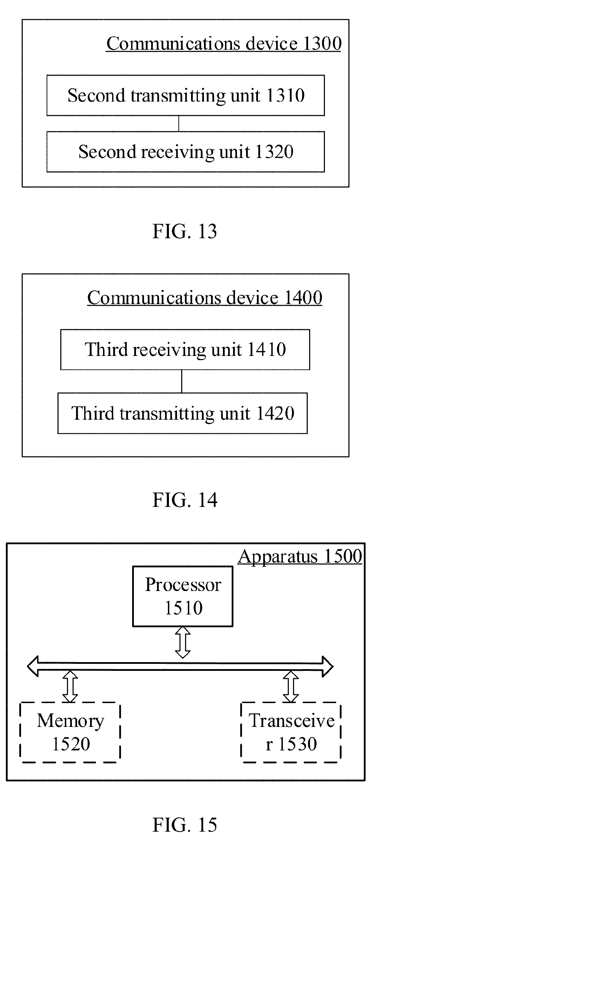

FIG. 13 is a schematic diagram of a structure of another communications device 1300 according to an embodiment of this application. The communications device 1300 is a second device. The communications device 1300 may include a second transmitting unit 1310 and a second receiving unit 1320.

The second transmitting unit 1310 is configured to transmit a second random number.

The first transmitting unit 1320 is configured to receive a first message transmitted by a first device, where the first message includes first authentication information of the first device, the first authentication information is generated based on a first key, the first authentication information is generated by using one or more of the following information: service-related information of the first device, an identity of a device that forwards the first message, a first random number of the first device, or the second random number, and the first key is generated based on a shared key.

In some embodiments, the first message further includes a ciphertext corresponding to service data, and the ciphertext is generated based on the first key.

In some embodiments, both the ciphertext and the first authentication information are generated based on a first algorithm.

In some embodiments, both the second key and the third key are generated based on the first key, the second key is different from the third key, and the ciphertext being generated based on the first key includes: the ciphertext being generated based on the second key; and the first authentication information being generated based on the first key includes: the first authentication information being generated based on the third key.

In some embodiments, the first key is further used to generate second authentication information for the second device.

In some embodiments, the communications device 1300 is further configured to receive a first authentication request transmitted by the first device. The first authentication request is used to request two-way identity authentication between the first device and the second device.

In some embodiments, the first authentication request includes the first random number, and the communications device 1300 is further configured to: verify whether the first random number is the same as a historically received random number; and in a case that the first random number is the same as the historically received random number, reject to respond to the first authentication request.

In some embodiments, the communications device 1300 is further configured to transmit a first authentication reply. The first authentication reply is used to reply to the first authentication request, and the first authentication reply includes the second random number.

In some embodiments, the first authentication request includes a first identity of the first device, and the first identity is associated with the shared key.

In some embodiments, the first identity includes one or more of the following identities of the first device: an AIoT identifier, an SUCI, or an SUPI.

In some embodiments, the first authentication request is transmitted via a third device, and the first authentication request is rejected in a case that no mapping relationship exists between the first identity and a second identity of the third device.

In some embodiments, the receiving the first authentication request transmitted by the first device includes: receiving, in response to the first device receiving first trigger information, the first authentication request transmitted by the first device.

In some embodiments, the communication device 1300 is further configured to: generate the first key based on the first random number, the second random number, and the shared key.

In some embodiments, the communications device 1300 is further used to generate second authentication information for the second device.

In some embodiments, the communications device 1300 is further configured to transmit a second request. The second request is used to request to derive the first key.

In some embodiments, the second request is further used to request to generate second authentication information for the second device.

In some embodiments, the communications device 1300 is further configured to: receive response information to the second request; and generate the second authentication information in a case that the response information to the second request does not include the second authentication information of the second device.

In some embodiments, the first device is an AIoT terminal, and the second device includes one or more network devices.

FIG. 14 is a schematic diagram of a structure of another communications device 1400 according to an embodiment of this application. The communications device 1400 is a third device. The communications device 1400 include a third receiving unit 1410 and a third transmitting unit 1420.

The third receiving unit 1410 is configured to receive a first message transmitted by a first device. The third transmitting unit 1420 is configured to transmit the first message to a second device, where the first message includes first authentication information of the first device, the first authentication information is generated based on a first key, the first authentication information is generated by using one or more of the following information: service-related information of the first device, an identity of a device that forwards the first message, a first random number of the first device, or a second random number of the second device, and the first key is generated based on a shared key.

In some embodiments, the first message further includes a ciphertext corresponding to service data, and the ciphertext is generated based on the first key.

In some embodiments, both the ciphertext and the first authentication information are generated based on a first algorithm.

In some embodiments, both the second key and the third key are generated based on the first key, the second the key is different from the third key, and the ciphertext being generated based on the first key includes: the ciphertext being generated based on the second key; and the first authentication information being generated based on the first key includes: the first authentication information being generated based on the third key.

In some embodiments, the first key is further used to generate second authentication information for the second device.

In some embodiments, the communications device 1400 is further configured to receive a first authentication request transmitted by the first device; and transmit the first authentication request to the second device. The first authentication request is used to request two-way identity authentication between the first device and the second device.

In some embodiments, the third transmitting unit is configured to: transmit the first authentication request to the second device in a case that a first condition is met. The first condition includes that a mapping relationship exists between a first identity and a second identity of the third device.

In some embodiments, the receiving the first authentication request transmitted by the first device includes: receiving, in response to the first device receiving first trigger information, the first authentication request transmitted by the first device.

In some embodiments, the first device is an AIoT terminal, and the second device includes one or more network devices.

In an optional embodiment, the first receiving unit 1220, the first transmitting unit 1240, the second transmitting unit 1310, the second receiving unit 1320, the third receiving unit 1410, or the third transmitting unit 1420 may be a transceiver 1530, and the key generation unit 1210 or the generation unit 1230 may be a processor 1510. The communications device 1200, the communications device 1300, or the communications device 1400 may further include a memory 1520. Details are shown in FIG. 15.

FIG. 15 is a schematic diagram of a structure of a communications apparatus according to an embodiment of this application. Dashed lines in FIG. 15 indicate that a unit or module is optional. The apparatus 1500 may be configured to implement the methods described in the foregoing method embodiments. The apparatus 1500 may be a chip, a terminal, or a network device.

The apparatus 1500 may include one or more processors 1510. The processor 1510 may support the apparatus 1500 in implementing the methods described in the foregoing method embodiments. The processor 1510 may be a general-purpose processor or a dedicated processor. For example, the processor may be a central processing unit (Central Processing Unit, CPU). Alternatively, the processor may be another general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program, and the program may be executed by the processor 1510, to cause the processor 1510 to execute the methods described in the foregoing method embodiments. The memory 1520 may be separated from or integrated into the processor 1510.

The apparatus 1500 may further include a transceiver 1530. The processor 1510 may communicate with another device or chip by using the transceiver 1530. For example, the processor 1510 may transmit data to and receive data from another device or chip by using the transceiver 1530.

An embodiment of this application further provides a computer-readable storage medium for storing a program. The computer-readable storage medium may be applied to the terminal or the network device provided in embodiments of this application, and the program causes a computer to perform the methods to be performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods to be performed by the terminal or the network device in various embodiments of this application.

An embodiment of this application further provides a computer program. The computer program may be applied to the terminal or the network device provided in embodiments of this application, and the computer program causes a computer to perform the methods to be performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In the embodiments of this application, "indicate" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (Digital Subscriber Line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first device, a first key based on a shared key;
receiving, by the first device, a second random number of a second device;
generating, by the first device, first authentication information of the first device based on the first key; and
transmitting, by the first device, a first message to the second device, wherein the first message comprises the first authentication information, wherein
the first authentication information is generated by using one or more of the following information: device information, service-related information, an identity of a device that forwards the first message, a first random number of the first device, or the second random number.

2. The method according to claim 1, further comprising:
generating, by the first device based on the first key, a ciphertext corresponding to service data, wherein
the first message further comprises the ciphertext.

3. The method according to claim 2, wherein both the ciphertext and the first authentication information are obtained based on a first algorithm.

4. The method according to claim 2, further comprising:
generating, by the first device, a second key and a third key based on the first key, wherein the second key is different from the third key;
the generating, by the first device based on the first key, the ciphertext corresponding to the service data comprises:
generating, by the first device, the ciphertext based on the second key; and
the generating, by the first device, the first authentication information of the first device based on the first key comprises:
generating, by the first device, the first authentication information based on the third key.

5. The method according to any one of claims 1 to 4, wherein the first key is further used to generate second authentication information of the second device.

6. The method according to any one of claims 1 to 5, further comprising:
transmitting, by the first device, a first authentication request, wherein
the first authentication request is used to request two-way identity authentication between the first device and the second device.

7. The method according to claim 6, wherein the method further comprises:
receiving, by the first device, a first authentication reply transmitted by the second device, wherein the first authentication reply is used to reply to the first authentication request, and the first authentication reply comprises the second random number;
verifying, by the first device, whether the second random number is the same as a historically received random number; and
in a case that the second random number is the same as the historically received random number, rejecting, by the first device, to respond to the first authentication reply.

8. The method according to claim 7, wherein the first authentication reply further comprises second authentication information of the second device, and the method further comprises:
verifying, by the first device, the second authentication information; and
in a case that the verification of the second random number fails, rejecting, by the first device, to respond to the first authentication reply.

9. The method according to any one of claims 6 to 8, wherein the first authentication request comprises a first identity of the first device, and the first identity is associated with the shared key.

10. The method according to claim 9, wherein the first identity comprises one or more of the following identities of the first device: an ambient power-enabled internet of things AIoT identifier, a subscription concealed identifier SUCI, or a subscription permanent identifier SUPI.

11. The method according to any one of claims 6 to 10, wherein the first authentication request is transmitted via a third device, and the first authentication request is rejected in a case that no mapping relationship exists between the first identity and a second identity of the third device.

12. The method according to any one of claims 6 to 11, wherein the transmitting, by the first device, the first authentication request comprises:
transmitting, by the first device, the first authentication request in response to the first device receiving first trigger information.

13. The method according to any one of claims 1 to 12, wherein the first device is an AIoT terminal, and the second device comprises one or more network devices.

14. A communication method, comprising:
transmitting, by a second device, a second random number; and
receiving, by the second device, a first message transmitted by a first device, wherein
the first message comprises first authentication information of the first device, the first authentication information is generated based on a first key, the first authentication information is generated by using one or more of the following information: device information, service-related information, an identity of a device that forwards the first message, a first random number of the first device, or the second random number, and the first key is generated based on a shared key.

15. The method according to claim 14, wherein the first message further comprises a ciphertext corresponding to service data, and the ciphertext is generated based on the first key.

16. The method according to claim 15, wherein both the ciphertext and the first authentication information are obtained based on a first algorithm.

17. The method according to claim 15, wherein both a second key and a third key are generated based on the first key, the second key is different from the third key, and
the ciphertext being generated based on the first key comprises:
the ciphertext being generated based on the second key; and
the first authentication information being generated based on the first key comprises:
the first authentication information being generated based on the third key.

18. The method according to any one of claims 14 to 17, wherein the first key is further used to generate second authentication information of the second device.

19. The method according to any one of claims 14 to 18, further comprising:
receiving, by the second device, a first authentication request transmitted by the first device, wherein
the first authentication request is used to request two-way identity authentication between the first device and the second device.

20. The method according to claim 19, wherein the first authentication request comprises the first random number, and the method further comprises:
verifying, by the second device, whether the first random number is the same as a historically received random number; and
in a case that the first random number is the same as the historically received random number, rejecting, by the second device, to respond to the first authentication request.

21. The method according to claim 19 or 20, wherein the method further comprises:
transmitting, by the second device, a first authentication reply, wherein the first authentication reply is used to reply to the first authentication request, and the first authentication reply comprises the second random number.

22. The method according to any one of claims 19 to 20, wherein the first authentication request comprises a first identity of the first device, and the first identity is associated with the shared key.

23. The method according to claim 22, wherein the first identity comprises one or more of the following identities of the first device: an ambient power-enabled internet of things AIoT identifier, a subscription concealed identifier SUCI, or a subscription permanent identifier SUPI.

24. The method according to any one of claims 19 to 23, wherein the first authentication request is transmitted via a third device, and the first authentication request is rejected in a case that no mapping relationship exists between the first identity and a second identity of the third device.

25. The method according to any one of claims 19 to 24, wherein the receiving, by the second device, the first authentication request transmitted by the first device comprises:
receiving, by the second device in response to the first device receiving first trigger information, the first authentication request transmitted by the first device.

26. The method according to claims 14 to 25, further comprising:
generating, by the second device, the first key based on the first random number, the second random number, and the shared key.

27. The method according to claim 26, further comprising:
generating, by the second device, second authentication information of the second device.

28. The method according to any one of claims 14 to 27, further comprising:
transmitting, by the second device, a second request, wherein the second request is used to request to generate the first key.

29. The method according to claim 28, wherein the second request is further used to request to generate second authentication information of the second device.

30. The method according to claim 28 or 29, further comprising:
receiving, by the second device, response information to the second request; and
generating, by the second device, the second authentication information in a case that the response information to the second request does not comprise the second authentication information of the second device.

31. The method according to any one of claims 14 to 30, wherein the first device is an AIoT terminal, and the second device comprises one or more network devices.

32. A communication method, comprising:
receiving, by a third device, a first message transmitted by a first device; and
transmitting, by the third device, the first message to a second device, wherein
the first message comprises first authentication information of the first device, the first authentication information is generated based on a first key, the first authentication information is generated by using one or more of the following information: device information, service-related information, an identity of a device that forwards the first message, a first random number of the first device, or a second random number of the second device, and the first key is generated based on a shared key.

33. The method according to claim 32, wherein the first message further comprises a ciphertext corresponding to service data, and the ciphertext is generated based on the first key.

34. The method according to claim 33, wherein both the ciphertext and the first authentication information are obtained based on a first algorithm.

35. The method according to claim 33, wherein both a second key and a third key are generated based on the first key, the second key is different from the third key, and
the ciphertext being generated based on the first key comprises:
the ciphertext being generated based on the second key; and
the first authentication information being generated based on the first key comprises:
the first authentication information being generated based on the third key.

36. The method according to any one of claims 32 to 35, wherein the first key is further used to generate second authentication information of the second device.

37. The method according to any one of claims 32 to 35, further comprising:
receiving, by the third device, a first authentication request transmitted by the first device; and
transmitting, by the third device, the first authentication request to the second device, wherein
the first authentication request is used to request two-way identity authentication between the first device and the second device.

38. The method according to claim 37, wherein the transmitting, by the third device, the first authentication request to the second device comprises:
transmitting, by the third device, the first authentication request to the second device in a case that a first condition is met, wherein
the first condition comprises that a mapping relationship exists between the first identity and a second identity of the third device.

39. The method according to claim 37 or 38, wherein the receiving, by the third device, the first authentication request transmitted by the first device comprises:
receiving, by the third device in response to the first device receiving first trigger information, the first authentication request transmitted by the first device.

40. The method according to any one of claims 32 to 39, wherein the first device is an AIoT terminal, and the second device comprises one or more network devices.

41. A communications device, wherein the communications device is a first device, and the communications device comprises:
a key generation unit, configured to generate a first key based on a shared key;
a first receiving unit, configured to receive a second random number of a second device;
a generation unit, configured to generate first authentication information of the first device based on the first key; and
a first transmitting unit, configured to transmit a first message to the second device, wherein the first message comprises the first authentication information, wherein
the first authentication information is generated by using one or more of the following information: device information, service-related information, an identity of a device that forwards the first message, a first random number of the first device, or the second random number.

42. The communications device according to claim 41, wherein the generation unit is further configured to:
generate, based on the first key, a ciphertext corresponding to service data, wherein
the first message further comprises the ciphertext.

43. The communications device according to claim 42, wherein both the ciphertext and the first authentication information are obtained based on a first algorithm.

44. The communications device according to claim 42, wherein the communications device is further configured to:
generate a second key and a third key based on the first key, wherein the second key is different from the third key;
the generation unit is specifically configured to:
generate the ciphertext based on the second key; and
generate the first authentication information based on the third key.

45. The communications device according to any one of claims 41 to 44, wherein the first key is further used to generate second authentication information of the second device.

46. The communications device according to any one of claims 41 to 45, wherein the communications device is further configured to:
transmit a first authentication request, wherein
the first authentication request is used to request two-way identity authentication between the first device and the second device.

47. The communications device according to claim 46, wherein the communications device is further configured to:
receive a first authentication reply transmitted by the second device, wherein the first authentication reply is used to reply to the first authentication request, and the first authentication reply comprises the second random number;
verify whether the second random number is the same as a historically received random number; and
in a case that the second random number is the same as the historically received random number, reject to respond to the first authentication reply.

48. The communications device according to claim 47, wherein the first authentication reply further comprises second authentication information of the second device, and the communications device is further configured to:
verify the second authentication information; and
in a case that the verification of the second random number fails, reject to respond to the first authentication reply.

49. The communications device according to any one of claims 46 to 48, wherein the first authentication request comprises a first identity of the first device, and the first identity is associated with the shared key.

50. The communications device according to claim 49, wherein the first identity comprises one or more of the following identities of the first device: an ambient power-enabled internet of things AIoT identifier, a subscription concealed identifier SUCI, or a subscription permanent identifier SUPI.

51. The communications device according to any one of claims 46 to 50, wherein the first authentication request is transmitted via a third device, and the first authentication request is rejected in a case that no mapping relationship exists between the first identity and a second identity of the third device.

52. The communications device according to any one of claims 46 to 51, wherein the transmitting the first authentication request comprises:
transmitting the first authentication request in response to the first device receiving first trigger information.

53. The communications device according to any one of claims 41 to 52, wherein the first device is an AIoT terminal, and the second device comprises one or more network devices.

54. A communications device, wherein the communications device is a second device, and the communications device comprises:
a second transmitting unit, configured to transmit a second random number; and
a second receiving unit, configured to receive a first message transmitted by a first device, wherein
the first message comprises first authentication information of the first device, the first authentication information is generated based on a first key, the first authentication information is generated by using one or more of the following information: device information, service-related information, an identity of a device that forwards the first message, a first random number of the first device, or the second random number, and the first key is generated based on a shared key.

55. The communications device according to claim 54, wherein the first message further comprises a ciphertext corresponding to service data, and the ciphertext is generated based on the first key.

56. The communications device according to claim 55, wherein both the ciphertext and the first authentication information are obtained based on a first algorithm.

57. The communications device according to claim 55, wherein both a second key and a third key are generated based on the first key, the second key is different from the third key, and
the ciphertext being generated based on the first key comprises:
the ciphertext being generated based on the second key; and
the first authentication information being generated based on the first key comprises:
the first authentication information being generated based on the third key.

58. The communications device according to any one of claims 54 to 57, wherein the first key is further used to generate second authentication information of the second device.

59. The communications device according to any one of claims 54 to 58, wherein the communications device is further configured to:
receive a first authentication request transmitted by the first device, wherein
the first authentication request is used to request two-way identity authentication between the first device and the second device.

60. The communications device according to claim 59, wherein the first authentication request comprises the first random number, and the communications device is further configured to:
verify whether the first random number is the same as a historically received random number; and
in a case that the first random number is the same as the historically received random number, reject to respond to the first authentication request.

61. The communications device according to claim 59 or 60, wherein the communications device is further configured to:
transmit a first authentication reply, wherein the first authentication reply is used to reply to the first authentication request, and the first authentication reply comprises the second random number.

62. The communications device according to any one of claims 59 to 61, wherein the first authentication request comprises a first identity of the first device, and the first identity is associated with the shared key.

63. The communications device according to claim 62, wherein the first identity comprises one or more of the following identities of the first device: an ambient power-enabled internet of things AIoT identifier, a subscription concealed identifier SUCI, or a subscription permanent identifier SUPI.

64. The communications device according to any one of claims 59 to 63, wherein the first authentication request is transmitted via a third device, and the first authentication request is rejected in a case that no mapping relationship exists between the first identity and a second identity of the third device.

65. The communications device according to any one of claims 59 to 64, wherein the receiving the first authentication request transmitted by the first device comprises:
receiving, in response to the first device receiving first trigger information, the first authentication request transmitted by the first device.

66. The communications device according to claims 54 to 65, wherein the communications device is further configured to:
generate the first key based on the first random number, the second random number, and the shared key.

67. The communications device according to claim 66, wherein the communications device is further configured to:
generate second authentication information of the second device.

68. The communications device according to any one of claims 54 to 65, wherein the communications device is further configured to:
transmit a second request, wherein the second request is used to request to generate the first key.

69. The communications device according to claim 68, wherein the second request is further used to request to generate second authentication information of the second device.

70. The communications device according to claim 68 or 69, wherein the communications device is further configured to:
receive response information to the second request; and
generate the second authentication information in a case that the response information to the second request does not comprise the second authentication information of the second device.

71. The communications device according to any one of claims 54 to 70, wherein the first device is an AIoT terminal, and the second device comprises one or more network devices.

72. A communications device, wherein the communications device is a third device, and the communications device comprises:
a third receiving unit, configured to receive a first message transmitted by a first device; and
a third transmitting unit, configured to transmit the first message to a second device, wherein
the first message comprises first authentication information of the first device, the first authentication information is generated based on a first key, the first authentication information is generated by using one or more of the following information: device information, service-related information, an identity of a device that forwards the first message, a first random number of the first device, or a second random number of the second device, and the first key is generated based on a shared key.

73. The communications device according to claim 72, wherein the first message further comprises a ciphertext corresponding to service data, and the ciphertext is generated based on the first key.

74. The communications device according to claim 73, wherein both the ciphertext and the first authentication information are obtained based on a first algorithm.

75. The communications device according to claim 73, wherein both a second key and a third key are generated based on the first key, the second key is different from the third key, and
the ciphertext being generated based on the first key comprises:
the ciphertext being generated based on the second key; and
the first authentication information being generated based on the first key comprises:
the first authentication information being generated based on the third key.

76. The communications device according to any one of claims 72 to 75, wherein the first key is further used to generate second authentication information of the second device.

77. The communications device according to any one of claims 72 to 76, wherein the communications device is further configured to:
receive a first authentication request transmitted by the first device; and
transmit the first authentication request to the second device, wherein
the first authentication request is used to request two-way identity authentication between the first device and the second device.

78. The communications device according to claim 77, wherein the third transmitting unit is configured to:
transmit the first authentication request to the second device in a case that a first condition is met, wherein
the first condition comprises that a mapping relationship exists between the first identity and a second identity of the third device.

79. The communications device according to claim 77 or 78, wherein the receiving the first authentication request transmitted by the first device comprises:
receiving, in response to the first device receiving first trigger information, the first authentication request transmitted by the first device.

80. The communications device according to any one of claims 72 to 79, wherein the first device is an AIoT terminal, and the second device comprises one or more network devices.

81. A communications device, comprising a memory and a processor, wherein the memory is configured to store a program, and the processor is configured to invoke the program in the memory to cause the communications device to execute the method according to any one of claims 1 to 40.

82. An apparatus, comprising a processor, configured to invoke a program from a memory, to cause the apparatus to execute the method according to any one of claims 1 to 40.

83. A chip, comprising a processor, configured to invoke a program from a memory, to cause a device on which the chip is installed to execute the method according to any one of claims 1 to 40.

84. A computer-readable storage medium, wherein the computer-readable storage medium stores a program, and the program causes a computer to execute the method according to any one of claims 1 to 40.

85. A computer program product, comprising a program that causes a computer to execute the method according to any one of claims 1 to 40.

86. A computer program, wherein the computer program causes a computer to execute the method according to any one of claims 1 to 40.
